# EUROPEAN PATENT SPECIFICATION

(11) **EP 1 906 596 B1**
(45) Date of publication and mention of the grant of the patent: **14.09.2011**
(21) Application number: 07010400.5
(22) Date of filing: 24.05.2007
(51) Int. Cl.: H04L 12/28, H01Q 3/01, H04B 1/59

(54) **Cable modem with integrated RF identification and methods for use therewith**
Kabelmodem mit integrierter Hochfrequenzidentifizierung und Verwendungsverfahren dafür
Modem à câble avec identification RF intégrée et leurs procédés d'utilisation

(30) Priority: 26.09.2006 US 527132
(43) Date of publication of application: 02.04.2008
(73) Proprietor: Broadcom Corporation, Irvine, CA 92617 (US)
(72) Inventor: Rofougaran, Ahmadreza, Irvine, CA 92617 (US)
(74) Representative: Jehle, Volker Armin

(56) References cited:
- WO-A1-2006/014795
- US-A1- 2003 087 629
- US-A1- 2004 117 269
- US-A1- 2005 232 210
- HALLBJORNER P: "Electrically Small Unbalanced Four-Arm Wire Antenna", IEEE TRANSACTIONS ON ANTENNAS AND PROPAGATION, IEEE SERVICE CENTER, PISCATAWAY, NJ, US LNKD- DOI:10.1109/TAP.2004.829851, vol. 52, no. 6, 1 June 2004 (2004-06-01), pages 1424-1428, XP011113762, ISSN: 0018-926X
- JAN CRANINCKX, STÉPHANE DONNAY: "4G Terminals: How are We Going to Design Them", ACM, 2 PENN PLAZA, SUITE 701 - NEW YORK USA ORD - 0000-00-00, 2 June 2003 (2003-06-02), - 6 June 2003 (2003-06-06), XP040149933, DAC 2003

## Description

### BACKGROUND OF THE INVENTION

### TECHNICAL FIELD OF THE INVENTION

This invention relates generally to wireless communications systems and more particularly to cable modems used within such wireless communication systems.

### DESCRIPTION OF RELATED ART

Communication systems are known to support wireless and wire line communications between wireless and/or wire line communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), radio frequency identification (RFID), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system or a particular RF frequency for some systems) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network optionally through a separate modem, such as a dial-up modem, cable modem, wireless modem, digital subscriber line modem or other broadband or narrowband connection.

In order to implement a home network, many different devices are required to be independently set up and connected. In some circumstances, devices that are designed to interoperate or that are designed to universally interoperate do not function with one another, particularly when these devices are produced by different manufacturers. Excess cabling can also be an issue when multiple devices are interconnected on a wired basis.

US 2004/0117269 A1 describes a system providing support for user transactions in a media exchange network. An embodiment may comprise a television display, storage, and a set top box, and may provide an interface device for receiving from a user associated authorization device, information for authorizing user transactions via a communication network. A user transaction may comprise the exchange, purchase, storage, or consumption of media such as, for example, audio, still images, video, and data. The communication network may comprise a cable infrastructure, a digital subscriber line infrastructure, a wireless infrastructure, and may be the internet. The system may provide for the completion of the user transaction without divulging the identity of the user to a vendor.

The present invention is directed to apparatus and methods of operation that are further described in the following Brief Description of the Drawings, the Detailed Description of the Invention, and the claims.

Other features and advantages of the present invention will become apparent from the following detailed description of the invention made with reference to the accompanying drawings.

### BRIEF DESCRIPTION OF THE SEVERAL VIEWS OF THE DRAWING(S)

FIG. 1 is a pictorial block diagram of a cable modem system in accordance with the present invention.
FIG. 2 is a schematic block diagram of a cable modem in accordance with the present invention.
FIG. 3 is a schematic block diagram of a cable modem in accordance with the present invention.
FIG. 4 is a schematic block diagram of an RF transceiver in accordance with the present invention.
FIG. 5 is a schematic block diagram of an embodiment of a programmable antenna in accordance with the present invention.
FIG. 6 is a schematic block diagram of an embodiment of a programmable antenna in accordance with the present invention.
FIG. 7 is a schematic block diagram of an embodiment of a programmable antenna element in accordance with the present invention.
FIG. 8 is a schematic block diagram of an embodiment of an adjustable impedance in accordance with the present invention.
FIG. 9 is a schematic block diagram of an embodiment of an adjustable impedance in accordance with the present invention.
FIG. 10 is a schematic block diagram of an embodiment of an adjustable impedance in accordance with the present invention.
FIG. 11 is a schematic block diagram of an embodiment of an adjustable impedance in accordance with the present invention.
FIG. 12 is a schematic block diagram of an embodiment of an adjustable impedance in accordance with the present invention.
FIG. 13 is a schematic block diagram of an embodiment of a programmable impedance matching network in accordance with the present invention.
FIG. 14 is a schematic block diagram of an embodiment of a programmable impedance matching network in accordance with the present invention.
FIG. 15 is a schematic block diagram of an embodiment of an adjustable transformer in accordance with the present invention.
FIG. 16 is a schematic block diagram of an RF transceiver in accordance with the present invention.
FIG. 17 is a schematic block diagram of an RF transmission system in accordance with the present invention.
FIG. 18 is a schematic block diagram of an RF reception system in accordance with the present invention.
FIG. 19 is a schematic block diagram of a phased array antenna system 282 system in accordance with the present invention.
FIG. 20 is a schematic block diagram of a phased array antenna system 296 system in accordance with the present invention.
FIG. 21 is a flowchart representation of a method in accordance with an embodiment of the present invention.
FIG. 22 is a flowchart representation of a method in accordance with an embodiment of the present invention.
FIG. 23 is a flowchart representation of a method in accordance with an embodiment of the present invention.
FIG. 24 is a flowchart representation of a method in accordance with an embodiment of the present invention.
FIG. 25 is a flowchart representation of a method in accordance with an embodiment of the present invention.
FIG. 26 is a flowchart representation of a method in accordance with an embodiment of the present invention.
FIG. 27 is a flowchart representation of a method in accordance with an embodiment of the present invention.
FIG. 28 is a flowchart representation of a method in accordance with an embodiment of the present invention.
FIG. 29 is a flowchart representation of a method in accordance with anembodiment of the present invention.
FIG. 30 is a flowchart representation of a method in accordance with an embodiment of the present invention.
FIG. 31 is a flowchart representation of a method in accordance with an embodiment of the present invention.

### DETAILED DESCRIPTION OF THE INVENTION

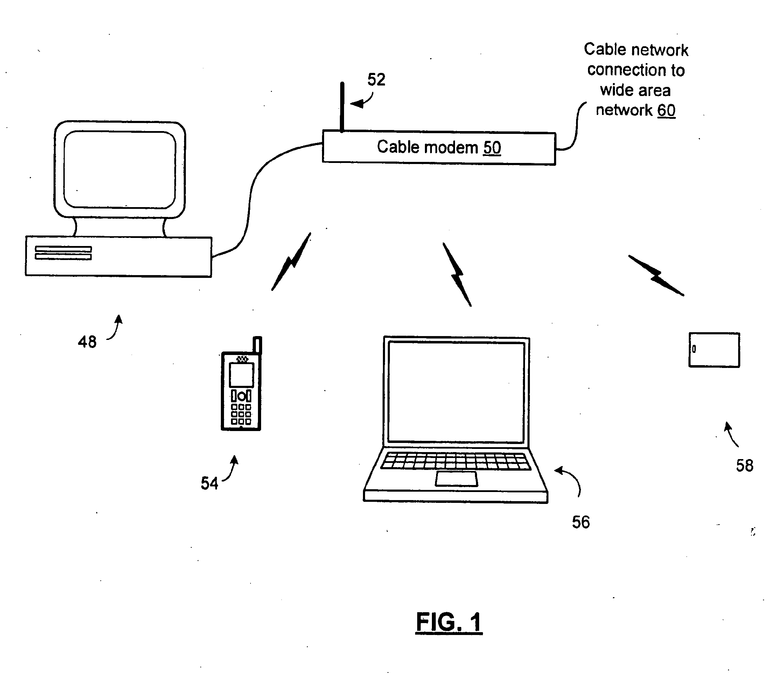

FIG. 1 is a pictorial block diagram of a cable modem system in accordance with the present invention. In particular, cable modem 50 is configured to provide bidirectional broadband access to remote devices such as personal computers 48 and 56, and wireless telephone 54 through a cable network connection to a wide area network, such as a private network or a public network such as the Internet.

Cable modem 50 is coupled to personal computer 48 or other remote devices via a wired connection, such as an Ethernet connection, Firewire connection (IEEE 1394), small computer system interface (SCSI) or other wired connection, either standard or proprietary. In addition, cable modem 50 includes antenna 52 and an RF transceiver that provides a radio frequency (RF) link such as a short range RF link that implements a Bluetooth protocol, wireless local area network protocol, such as an 802.11 protocol, ultra wideband (UWB) protocol, or other protocol, either standard or proprietary. In this fashion, personal computers 48 and 56 and wireless telephone 54 can access the Internet or other private network, to download movies, graphics, games, audio and other media content contained in one or more data files, can access private or public WebPages, can view streaming video programming and listen to streaming audio programming, run programs, send and receive messages such as text messages and other multimedia messaging, and perform any other functions supported by the wide area network 60. While particular remote devices are shown, other remote devices including personal digital assistants (PDAs) and other handheld devices, and other web ready appliances may likewise be coupled to cable modem 50 on either a wired or wireless basis.

In an embodiment of the present invention, the Cable modem 50 includes a resident voice-over-Internet-Protocol (VoIP) application that allows a remote device, such as wireless telephone 54 to send and receive VoIP calls. In particular, wireless telephone 54 can have an exclusive wireless connection to the cable modem such as a 900 MHz, 2.4 GHz or 5 GHz cordless telephone link and operate only as a VoIP telephone phone. Further wireless telephone 54 can operate as both a Web ready appliance that can access the wide area network 60 via cable modem 50 and a VoIP telephone. In these modes of operation, wireless telephone 54 can place VoIP calls, either completely over the Internet to another VoIP user or through a public switched telephone network (PSTN) gateway to a standard telephone set or mobile phone.

In the alternative, wireless telephone 54 can be a multi-band phone that includes a traditional 850 MHz, 900 MHz, 1800 MHz, 1900 MHz or other wireless transceiver that is capable of sending and receiving calls over a traditional wireless telephony network. In addition, wireless telephone 54 can be further operable to send and receive VoIP calls through cable modem 50 and optionally to roam to other access points or hotspots that support VoIP access via a Bluetooth, 802.11 or UWB communications link.

In a further embodiment of the present invention, cable modem 50 includes a resident secure access application and an RF tag reader for reading data, such as identification data from RF tag 58. In this mode of operation, RF tag 58 and resident secure access application of cable modem 50 can be used to identify a user and/or to approve a transaction of a user, such as a user of computer 48 or 56. For instance, a user that is shopping on a particular website may approve a purchase or provide payment, credit or debit information via information read from RF tag 58 for products and services. In addition, identification data from RF tag 58 can supply a password, encryption key or other secure information of the user to the secure access application of the cable modem to gain access, such as secure access, to the wide area network 60, or a particulate website of wide area network information 60.

Further, identification data from RF tag 58 can be used by the secure access application of the cable modem 50 to provide the equivalent of password access to controls and settings of the cable modem 50 and the cable network provider or other third party service provider with access to the wide area network 60. The user can optionally set parental controls on the cable modem to restrict access by amount of time per day or week, to particular times of the day or week, to particular types of content, services, websites, etc. Also, RF tag 58 can be used to gain access to controls of an affiliated network such as a broadcast cable network affiliated with the broadband access network. In this fashion, the user can order and/or pay for on-demand videos, downloads, pay-peruse services and other premium services and features.

In operation, when prompted by a web interface of wide area network 60, a graphical user interface of cable modem 50 through one or more of the remote devices, or through an interface such as computer, set-top box, radio or television coupled to an affiliated network, the user can provide identification data from the RF tag 58 by placing the card in proximity to the RF reader of cable modem 50 to read the identification data and to proceed with the access, transaction, etc.

While the forgoing description has contemplated the identification data be stored on an RF tag 58 that is read by an RF transceiver of cable modem 50 that acts as an RF tag reader, in an alternative embodiment, each of the foregoing functions can likewise be implemented by a remote device such as PDA or wireless telephone that can communicate with cable modem 50 via a short range RF link such as a Bluetooth or Wireless LAN link and that stores the identification data in a memory of the remote device. In this fashion, when prompted, a user can place a wireless telephone or other handheld device in proximity to the cable modem 50 that either reads the identification data automatically, reads the data in response to the user activating one or more keys, buttons, soft keys of the device, or in response to a user entering a password or other authentication data on the handheld device, or the user providing biometric data, such as a finger print, to the handheld device via a scanner or other biometric sensor.

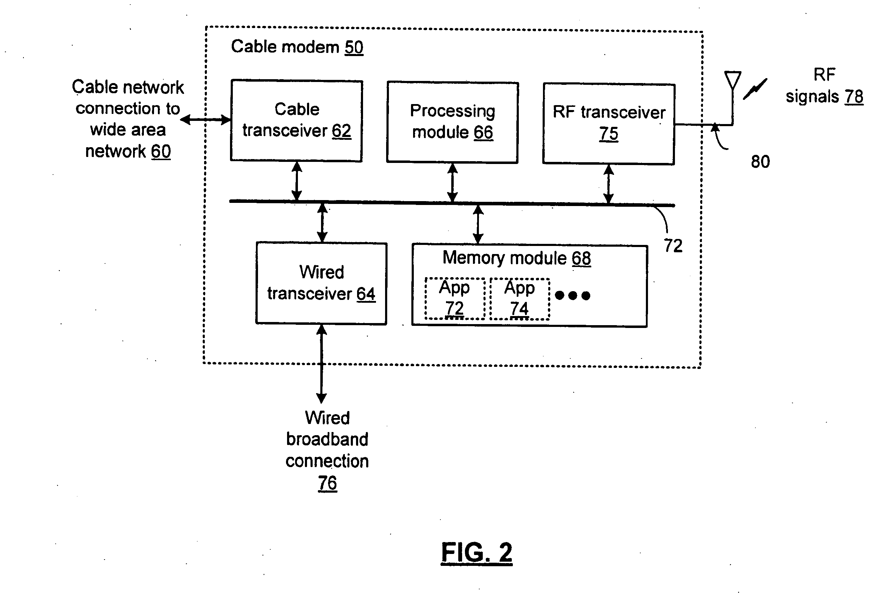

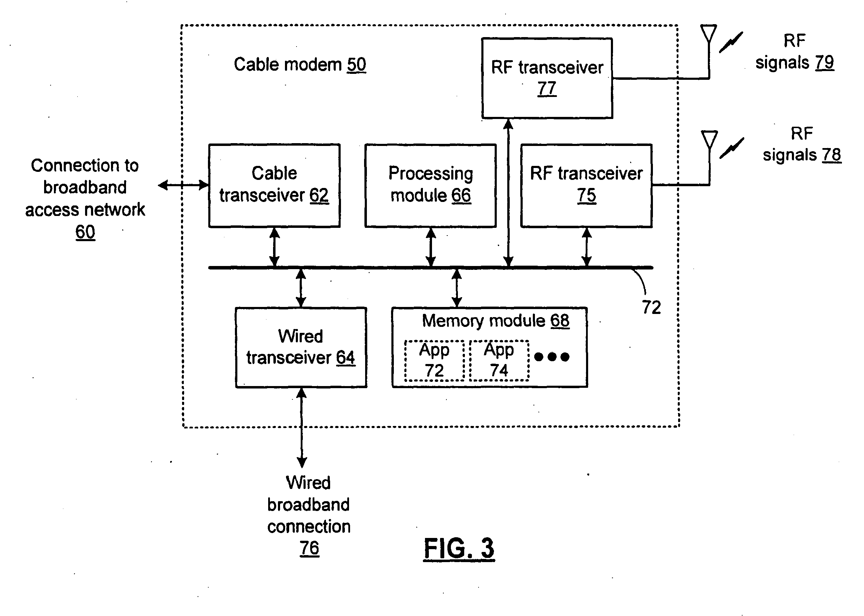

Further details regarding possible implementations of cable modem 50 are presented in conjunction with FIGs. 2 & 3 that follow.

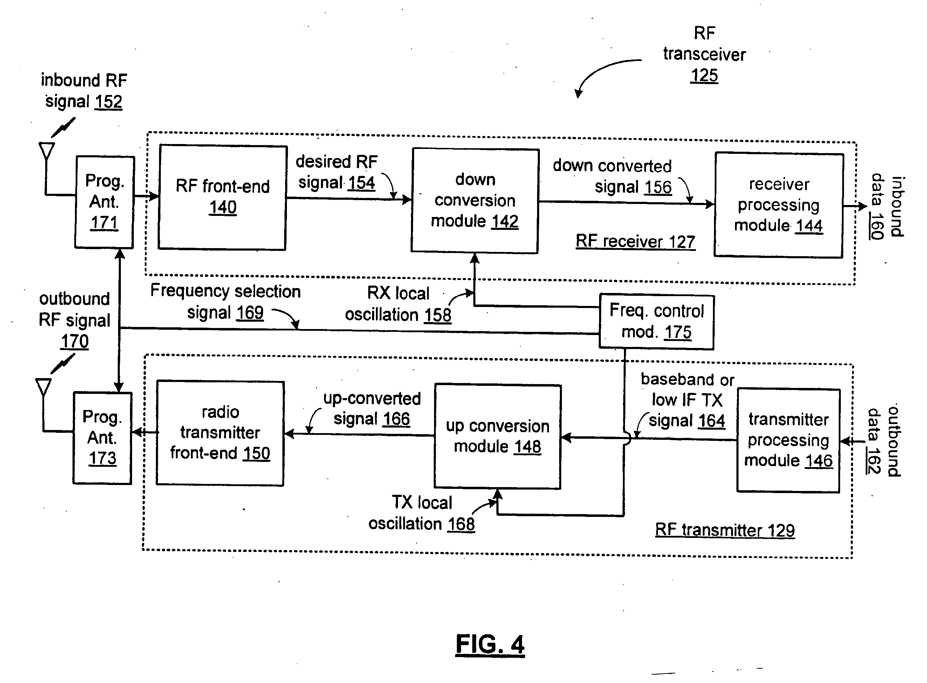

FIG. 2 is a schematic block diagram of a cable modem in accordance with the present invention. In particular, cable modem 50 includes a cable transceiver 62, wired transceiver 64, RF transceiver 75 coupled to antenna 80, processing module 66, and memory module 68 that are interconnected via bus 72. While a particular bus architecture is shown, other connectivity between the various modules of cable modem 50 including direct connectivity between one or more modules, or the use of two or more data buses may likewise be employed within the broad scope of the present invention. Antenna 80 can include one or more fixed antenna or a programmable antenna, a plurality of programmable antennas or an antenna array as discussed in greater detail in conjunction with FIGS 4-25 that follow.

Cable transceiver 62 includes a connection to wide area network 60 via a cable network, such as a coaxial cable network, hybrid fiber coax (HFC) network, optic fiber network or other cable network connection. In an embodiment of the present invention, cable transceiver 62 operates in accordance with one or more standard protocols such as data over cable system interface specification (DOCSIS), eDOCSIS, cable modem termination system (CMTS), embedded multimedia terminal adaptor (E-MTA) or other protocols, either standard or proprietary. Cable transceiver 62 operates to send and receive modulated data over the cable network to which it is connected to provide bidirectional broadband access to the wide area network 60.

Wired transceiver 64, in turn, provides bidirectional communication with a wired device, such as computer 48 or other remote device in accordance with a communication protocol such as Ethernet, Firewire (IEEE 1394), SCSI or other protocol, either standard or proprietary. In operation, data received by wired transceiver 64 that is destined for wide area network 60 is converted from the protocol used by the wired broadband connection 76 to the protocol used by cable transceiver 62 and is routed over the cable network and vice versa. For instance, data packets from each connection are buffered in a buffer memory, such as a shared memory or a buffer memory portion of memory module 68 for conversion and transmittal to the other connection. In this fashion, remote devices such as computer 48 can access the wide area network 60.

Memory module 68 further stores one or more applications 72, 74 such as the secure access application and VoIP application that have been previously discussed, as well as a configuration and setup application, other cable modem programs and utilities and optionally other programs that include a plurality of operational instructions. Processing module 66 executes these applications by executing the operational instructions contained therein. In an embodiment of the present invention, processing module 66 is implemented with a processing device. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory module 68 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 66 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

RF transceiver 75 provides bidirectional communication with a remote device over a short range radio frequency link at a selected carrier frequency. In various embodiments of the present invention, RF transceiver 75 can operate in accordance with IEEE 802.11 and versions thereof, Bluetooth, RFID, a cordless telephone communication path between the cable modem operating as a base station and a cordless telephony device, and/or any other type of radio frequency based network protocol. When implemented for communication with an RF tag such as an RFID tag (card), RF transceiver 75 operates as a RF tag reader to transmit an RF signal at a carrier frequency that is backscattered by the RF tag, based on information data contained therein, and received by the RF transceiver 75 for extraction of the information data contained therein. In this instance, RF signals 78 include these transmitted and received RF signals. The RF tag or tags derive power from the transmitted RF signal and respond on the same RF carrier frequency with the requested data. In this manner, the RF transceiver 75 can collect data as may be requested from the cable modem 50 from each of the RF tags within its coverage area. In addition, and/or in the alternative, the cable modem 50 may provide data to one or more of the RF tags via the associated RF transceiver 75. Such downloaded information can include identification data or other data that is application dependent and may vary greatly. Upon receiving the downloaded data, the RF tag can store the data in a non-volatile memory.

In one mode of operation, RF transceiver 75 operates to provide one or more remote devices with bidirectional broadband access to the wide area network via a short range radio frequency link such as 802.11, Bluetooth, UWB, or other wireless link. In operation, data received by RF transceiver 75 that is destined for wide area network 60 is converted from the protocol used by the RF transceiver 75 to the protocol used by cable transceiver 62 and is routed over the cable network and vice versa. For instance, data packets from each connection are buffered in a buffer memory, such as a shared memory or a buffer memory portion of memory module 68 for conversion and transmittal to the other connection. In this fashion, remote devices such as computer 56, wireless telephone 54 and/or other remote devices can access the wide area network 60.

In a further mode of operation discussed in conjunction with FIG. 1, processing module 66 executes a secure access application that reads identification data from a remote device via the short range radio frequency link implemented by RF transceiver 75. In various embodiments of RF transceiver 75, this short range RF link can be a RFID link for communication with an RF tag such as an RFID tag, a Bluetooth link for receiving identification data from a Bluetooth enabled telephone, handheld device or other Bluetooth enabled device, or a wireless LAN link such as an 802.11 or UWB link for gathering identification data from a compatible multi-band mobile phone, handheld device, or other mobile device. As discussed, the identification data can be used by the secure access application to identify the user in any number of possible scenarios including a purchase made by the user over the wide area network, a request for video on demand services, access by the user to the wide area network, access by the user to a particular site of the wide area network, and access to user settings, etc.

In an additional mode of operation, radio frequency transceiver, provides bidirectional communication with a wireless telephone, such as wireless telephone 54 over the short range radio frequency link such as 802.11, Bluetooth, UWB, a cordless telephone link or other RF link. Processing module 66 executes a VoIP application to provide VoIP service to the wireless telephone via the cable network. Wireless telephone 54 can be a VoIP telephone set that communicates exclusively over the radio frequency link. Alternatively, wireless telephone 54 can be a multi-band telephone that can selectively communicate over the radio frequency link and an alternative wireless telephony network such as a traditional wireless telephony network and that is further operable to selectively access data services of the wide area network via the cable modem and the radio frequency link.

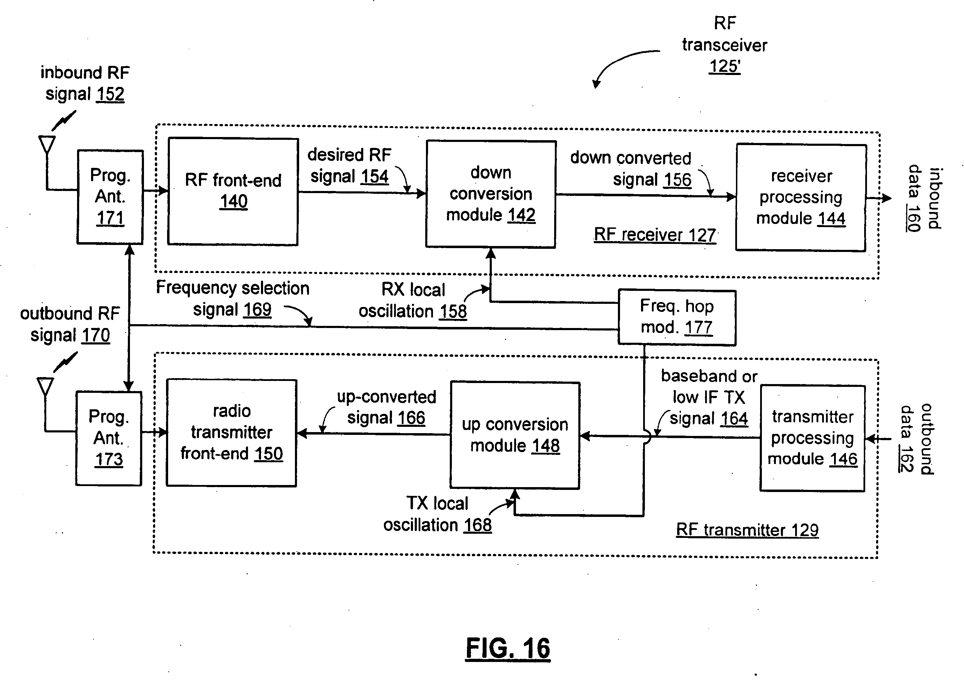

Cable transceiver 62, wired transceiver 64 and RF transceiver 75 can be implemented in circuitry, as will be apparent to one skilled in the art when presented the disclosure herein. In addition, portions of each of these devices can be implemented using a processing device, such as the processing device discussed in conjunction with processing module 66. Further details regarding the implementation of RF transceiver 75 are presented in conjunction with FIGs. 4 and 16 that follow.

FIG. 3 is a schematic block diagram of a cable modem in accordance with the present invention. In particular a cable modem 50' is presented that includes many common elements of cable modem 50 that are referred to by common reference numerals. In addition, cable modem includes a second RF transceiver for implementing two RF links and operating in two modes of operation on a simultaneous basis. For instance, cable modem 50' can provide wireless broadband access to one or more remote devices via RF transceiver 75, while providing secure access via an RF tag implemented via a separate RF reader implemented by RF transceiver 77. In addition, cable modem 50' can provide wireless broadband access to one or more remote devices via RF transceiver 75, while supplying VoIP services to a dedicated VoIP telephone via RF transceiver 77, as well as other combinations of services and functions.

FIG. 4 is a schematic block diagram of an RF transceiver in accordance with the present invention that can be used in the implementation of RF transceiver 75 and/or 77. The RF transceiver 125 includes an RF transmitter 129, an RF receiver 127 and a frequency control module 175. The RF receiver 127 includes a RF front end 140, a down conversion module 142, and a receiver processing module 144. The RF transmitter 129 includes a transmitter processing module 146, an up conversion module 148, and a radio transmitter front-end 150.

As shown, the receiver and transmitter are each coupled to a programmable antenna (171, 173), however, the receiver and transmitter may share a single antenna via a transmit/receive switch and/or transformer balun. In another embodiment, the receiver and transmitter may share a diversity antenna structure that includes two or more antenna such as programmable antennas 171 and 173. In another embodiment, the receiver and transmitter may each use its own diversity antenna structure that include two or more antennas such as programmable antennas 171 and 173. In another embodiment, the receiver and transmitter may share a multiple input multiple output (MIMO) antenna structure that includes a plurality of programmable antennas (171, 173). Accordingly, the antenna structure of the wireless transceiver will depend on the particular standard(s) to which the wireless transceiver is compliant.

In operation, the transmitter receives outbound data 162 from a host device or other source via the transmitter processing module 146. The transmitter processing module 146 processes the outbound data 162 in accordance with a particular wireless communication standard (e.g., IEEE 802.11, Bluetooth, RFID, GSM, CDMA, et cetera) to produce baseband or low intermediate frequency (IF) transmit (TX) signals 164. The baseband or low IF TX signals 164 may be digital baseband signals (e.g., have a zero IF) or digital low IF signals, where the low IF typically will be in a frequency range of one hundred kilohertz to a few megahertz. Note that the processing performed by the transmitter processing module 146 includes, but is not limited to, scrambling, encoding, puncturing, mapping, modulation, and/or digital baseband to IF conversion. Further note that the transmitter processing module 146 may be implemented using a shared processing device, individual processing devices, or a plurality of processing devices and may further include memory. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the processing module 146 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

The up conversion module 148 includes a digital-to-analog conversion (DAC) module, a filtering and/or gain module, and a mixing section. The DAC module converts the baseband or low IF TX signals 164 from the digital domain to the analog domain. The filtering and/or gain module filters and/or adjusts the gain of the analog signals prior to providing it to the mixing section. The mixing section converts the analog baseband or low IF signals into up converted signals 166 based on a transmitter local oscillation 168.

The radio transmitter front end 150 includes a power amplifier 84 and may also include a transmit filter module. The power amplifier amplifies the up converted signals 166 to produce outbound RF signals 170, which may be filtered by the transmitter filter module, if included. The antenna structure transmits the outbound RF signals 170 to a targeted device such as a RF tag, base station, an access point and/or another wireless communication device.

The receiver receives inbound RF signals 152 via the antenna structure, where a base station, an access point, or another wireless communication device transmitted the inbound RF signals 152. The antenna structure provides the inbound RF signals 152 to the receiver front-end 140, which will be described in greater detail with reference to FIG.s 4-7. In general, without the use of bandpass filters, the receiver front-end 140 blocks one or more undesired signals components 174 (e.g., one or more interferers) of the inbound RF signal 152 and passing a desired signal component 172 (e.g., one or more desired channels of a plurality of channels) of the inbound RF signal 152 as a desired RF signal 154.

The down conversion module 70 includes a mixing section, an analog to digital conversion (ADC) module, and may also include a filtering and/or gain module. The mixing section converts the desired RF signal 154 into a down converted signal 156 that is based on a receiver local oscillation 158, such as an analog baseband or low IF signal. The ADC module converts the analog baseband or low IF signal into a digital baseband or low IF signal. The filtering and/or gain module high pass and/or low pass filters the digital baseband or low IF signal to produce a baseband or low IF signal 156. Note that the ordering of the ADC module and filtering and/or gain module may be switched, such that the filtering and/or gain module is an analog module.

The receiver processing module 144 processes the baseband or low IF signal 156 in accordance with a particular wireless communication standard (e.g., IEEE 802.11, Bluetooth, RFID, GSM, CDMA, et cetera) to produce inbound data 160. The processing performed by the receiver processing module 144 includes, but is not limited to, digital intermediate frequency to baseband conversion, demodulation, demapping, depuncturing, decoding, and/or descrambling. Note that the receiver processing modules 144 may be implemented using a shared processing device, individual processing devices, or a plurality of processing devices and may further include memory. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the receiver processing module 144 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

Frequency control module 175 controls a frequency of the transmitter local oscillation and a frequency of the receiver local oscillation, in accordance with a desired carrier frequency. In an embodiment of the present invention, frequency control module includes a transmit local oscillator and a receive local oscillator that can operate at a plurality of selected frequencies corresponding to a plurality of carrier frequencies of the outbound RF signal 170. In addition, frequency control module 175 generates a frequency selection signal that indicates the current selection for the carrier frequency. In operation, the carrier frequency can be predetermined or selected under user control. In alternative embodiments, the frequency control module can change frequencies to implement a frequency hopping scheme that selectively controls the carrier frequency to a sequence of carrier frequencies. In a further embodiment, frequency control module 175 can evaluate a plurality of carrier frequencies and select the carrier frequency based on channel characteristics such as a received signal strength indication, signal to noise ratio, signal to interference ratio, bit error rate, retransmission rate, or other performance indicator.

In an embodiment of the present invention, frequency control module 175 includes a processing module that performs various processing steps to implement the functions and features described herein. Such a processing module can be implemented using a shared processing device, individual processing devices, or a plurality of processing devices and may further include memory. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the control module implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In an embodiment of the present invention, programmable antennas 171 and 173 are dynamically tuned to the particular carrier frequency or sequence of selected frequencies indicated by the frequency selection signal 169. In this fashion, the performance of each of these antennas can be optimized (in terms of performance measures such as impedance matching, gain and/or bandwidth) for the particular carrier frequency that is selected at any given point in time. Further details regarding the programmable antennas 171 and 173 including various implementations and uses are presented in conjunction with the FIGs. 4-24 that follow.

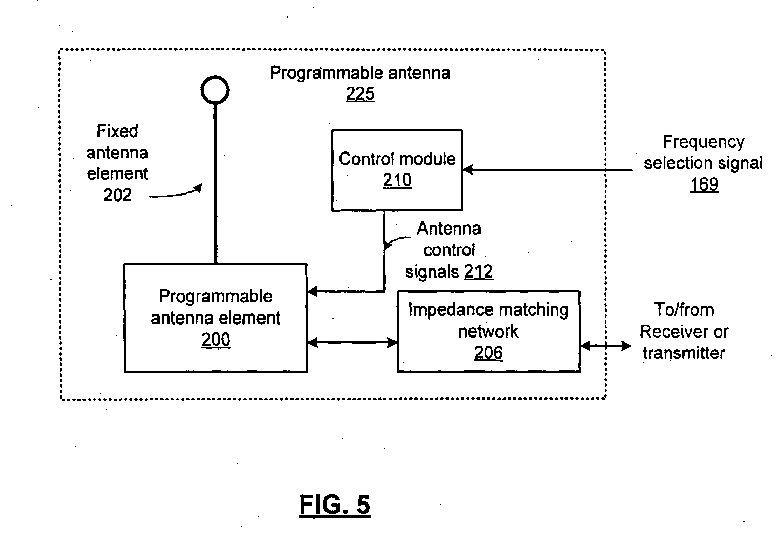

FIG. 5 is a schematic block diagram of an embodiment of a programmable antenna in accordance with the present invention. In particular, a programmable antenna 225 is presented that includes an antenna having a fixed antenna element 202 and a programmable antenna element 200. The programmable antenna 225 further includes a control module 210 and an impedance matching network 206. In operation, the programmable antenna 225 is tunable to one of a plurality of resonant frequencies in response to a frequency selection signal 169.

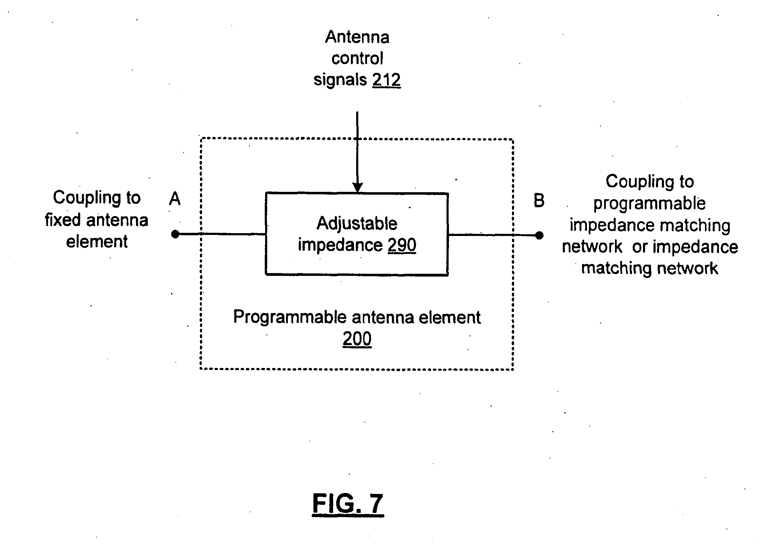

The programmable antenna element 200 is coupled to the fixed antenna element 202 and is tunable to a particular resonant frequency in response to one or more antenna control signals 212. In this fashion, programmable antenna 225 can be dynamically tuned to a particular carrier frequency or sequence of carrier frequencies of a transmitted RF signal and/or of a received RF signal. In an embodiment of the present invention, the fixed antenna element 202 has a resonant frequency or center frequency of operation that is dependent upon the physical dimensions of the fixed antenna element, such as a length of a one-quarter wavelength antenna element or other dimension. Programmable antenna element 200 modifies the "effective" length or dimension of the overall antenna by selectively adding or subtracting from the reactance of the programmable antenna element 200 to conform to changes in the selected frequency and the corresponding changes in wavelength. The fixed antenna element 202 can include one or more elements in combination that each can be a dipole, loop, annular slot or other slot configuration, rectangular aperture, circular aperture, line source, helical element or other element or antenna configuration. The programmable antenna element 200 can be implemented with an adjustable impedance having a reactance, and optionally a resistive component, that each can be programmed to any one of a plurality of values. Further details regarding additional implementations of programmable antenna element 200 are presented in conjunction with FIGs. 7-12 and 15 that follow.

Programmable antenna 225 optionally includes impedance matching network 206 that couples the programmable antenna 225 to and from a receiver or transmitter, either directly or through a transmission line. Impedance matching network 225 attempts to maximize the power transfer between the antenna and the receiver or between the transmitter and the antenna, to minimize reflections and/or standing wave ratio, and/or to bridge the impedance of the antenna to the receiver and/or transmitter or vice versa. In an embodiment of the present invention, the impedance matching network 206 includes a transformer such as a balun transformer, an L-section, pi-network, t-network or other impedance network that performs the function of impedance matching.

Control module 210 generates the one or more antenna control signals 212 in response to a frequency selection signal. In an embodiment of the present invention, control module 210 produces antenna control signals 212 to command the programmable antenna element to modify its impedance in accordance with a desired resonant frequency or the particular carrier frequency that is indicated by the frequency selection signal 169. For instance, in the event that frequency selection signal indicates a particular carrier frequency corresponding to a particular 802.11 channel of the 2.4 GHz band, the control module generates antenna control signals 212 that command the programmable antenna element 200 to adjust its impedance such that the overall resonant frequency of the programmable antenna, including both the fixed antenna element 202 and programmable antenna element 200 is equal to, substantially equal to or as close as possible to the selected carrier frequency.

In one mode of operation, the set of possible carrier frequencies is known in advance and the control module 210 is preprogrammed with the particular antenna control signals 212 that correspond to each carrier frequency, so that when a particular carrier frequency is selected, logic or other circuitry or programming such as via a look-up table can be used to retrieve the particular antenna control signals required for the selected frequency. In a further mode of operation, the control module 210, based on equations derived from impedance network principles that will be apparent to one of ordinary skill in the art when presented the disclosure herein, calculates the particular impedance that is required of programmable antenna network 200 and generates antenna control commands 212 to implement this particular impedance.

In an embodiment of the present invention, control module 210 includes a processing module that performs various processing steps to implement the functions and features described herein. Such a processing module can be implemented using a shared processing device, individual processing devices, or a plurality of processing devices and may further include memory. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the control module implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

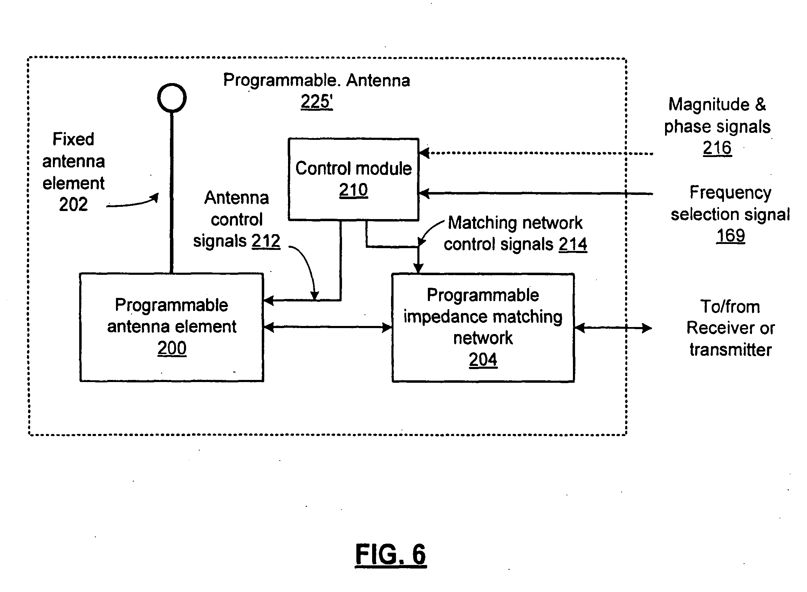

FIG. 6 is a schematic block diagram of an embodiment of a programmable antenna in accordance with the present invention. In particular, a programmable antenna 225' is shown that includes many common elements of programmable antenna 225 that are referred to by common reference numerals. In place of optional impedance matching network 206, programmable antenna 225' includes a programmable impedance matching network 204 that is tunable in response to one or more matching network control signals 214 generated by control module 210, to provide a substantially constant load impedance. In this fashion, changes to the overall impedance of the programmable antenna caused by variations in the impedance of the programmable antenna element 200 can be compensated by adjusting the programmable impedance matching network 204 at the same time. In addition or in the alternative, control module 210 can optionally adjust the impedance of programmable impedance matching network 204 to control the magnitude and phase of the antenna current of the programmable antenna based on magnitude and phase signals 216, or to adjust the magnitude and phase of the antenna current received from the programmable antenna to support applications such as implementation of programmable antenna 225' as part of a phased array antenna system.

As discussed in conjunction with the generation of the antenna control signals 212, control module 210 can be implemented with a processing device that retrieves the particular matching network control signals 214 in response to the particular frequency, magnitude and/or phase that are selected via frequency selection signal 169 and magnitude and phase signals 216 or calculates the particular matching network control signals 214 in real-time based on network equations and the particular frequency, magnitude and/or phase that are selected.

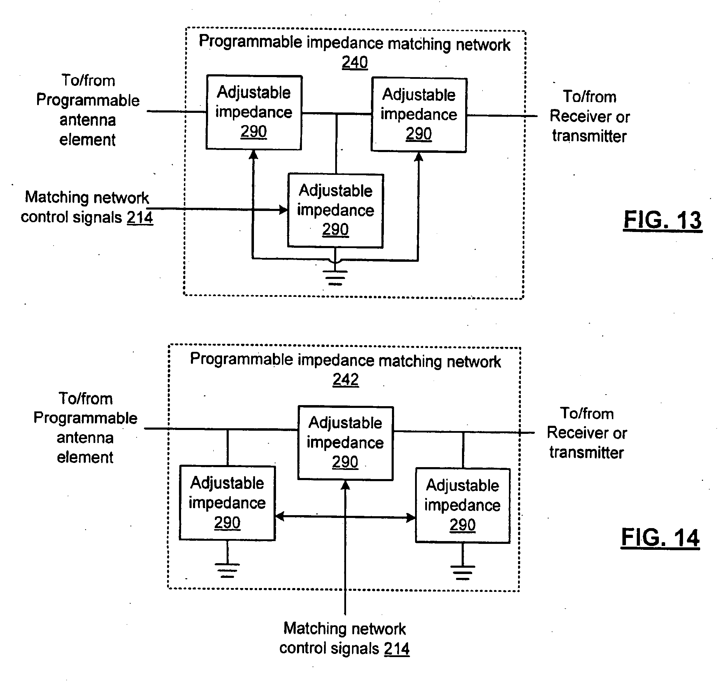

Further additional implementations of programmable impedance matching network 204 are presented in conjunction with FIGs. 13-15.

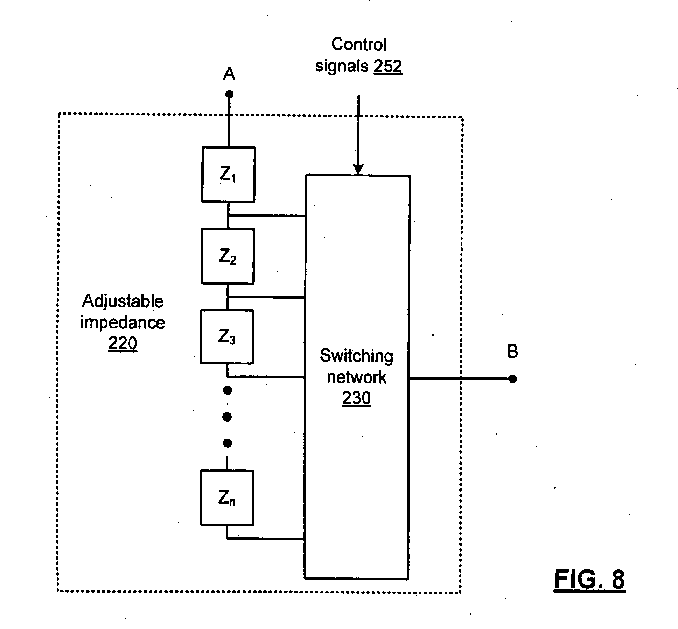

FIG. 7 is a schematic block diagram of an embodiment of a programmable antenna element in accordance with the present invention. In particular, programmable antenna element 200 is shown that includes an adjustable impedance 290 that is adjustable in response to antenna control signal 212. Adjustable impedance 290 is a complex impedance with an adjustable reactance and optionally a resistive component that is also adjustable. Adjustable impedance can include at least one adjustable reactive element such as an adjustable inductor, an adjustable capacitor, an adjustable tank circuit, an adjustable transformer such as a balun transformer or other adjustable impedance network or network element. Several additional implementations of adjustable impedance 290 are presented in conjunction with FIGs. 8-12 and 15 that follow.

FIG. 8 is a schematic block diagram of an embodiment of an adjustable impedance in accordance with the present invention. An adjustable impedance 220 is shown that includes a plurality of fixed network elements Z₁, Z₂, Z₃, ... Zₙ such as resistors, or reactive network elements such as capacitors, and/or inductors. A switching network 230 selectively couples the plurality of fixed network elements in response to one or more control signals 252, such as antenna control signals 212. In operation, the switching network 230 selects at least one of the plurality of fixed reactive network elements and that deselects the remaining ones of the plurality of fixed reactive network elements in response to the control signals 252. In particular, switching network 230 operates to couple one of the plurality of taps to terminal B. In this fashion, the impedance between terminals A and B is adjustable to include a total impedance Z₁, Z₁ + Z₂, Z₁ + Z₂ + Z₃, etc, based on the tap selected. Choosing the fixed network elements Z₁, Z₂, Z₃, ... Zₙ to be a plurality of inductors, allows the adjustable impedance 220 to implement an adjustable inductor having a range from (Z₁ to Z₁ + Z₂ + Z₃+....+ Zₙ). Similarly, choosing the fixed network elements Z₁, Z₂, Z₃, ... Zₙ to be a plurality of capacitors, allows the adjustable impedance 220 to implement an adjustable capacitor, etc.

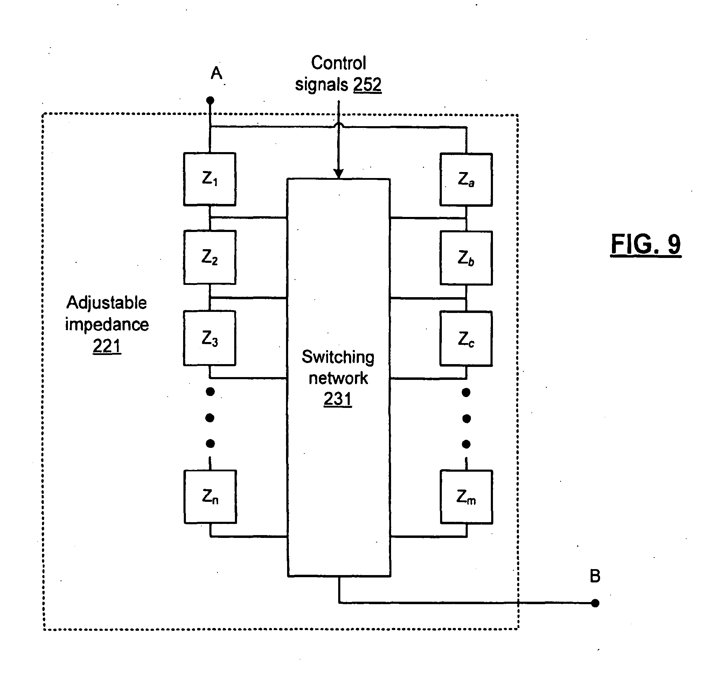

FIG. 9 is a schematic block diagram of an embodiment of an adjustable impedance in accordance with the present invention. An adjustable impedance 221 is shown that includes a plurality of group A fixed network elements Z₁, Z₂, Z₃, ... Zₙ and group B fixed network elements Zₐ, Z_{b}, Z_{c}, ... Zₘ such as resistors, or reactive network elements such as capacitors, and/or inductors. A switching network 231 selectively couples the plurality of fixed network elements in response to one or more control signals 252, such as antenna control signals 212 to form a parallel combination of two adjustable impedances. In operation, the switching network 231 selects at least one of the plurality of fixed reactive network elements and that deselects the remaining ones of the plurality of fixed reactive network elements in response to the control signals 252. In particular, switching network 231 operates to couple one of the plurality of taps from the group A impedances to one of the plurality of taps of the group B impedances to the terminal B. In this fashion, the impedance between terminals A and B is adjustable and can be to form a parallel circuit such as parallel tank circuit having a total impedance equal to the parallel combination between a group A impedance Z_{A} = Z₁, Z₁ + Z₂, or Z₁ + Z₂ + Z₃, etc, and a Group B impedance Z_{B} = Zₐ, Zₐ + Z_{b}, or Zₐ + Z_{b} + Z_{c}, etc., based on the taps selected.

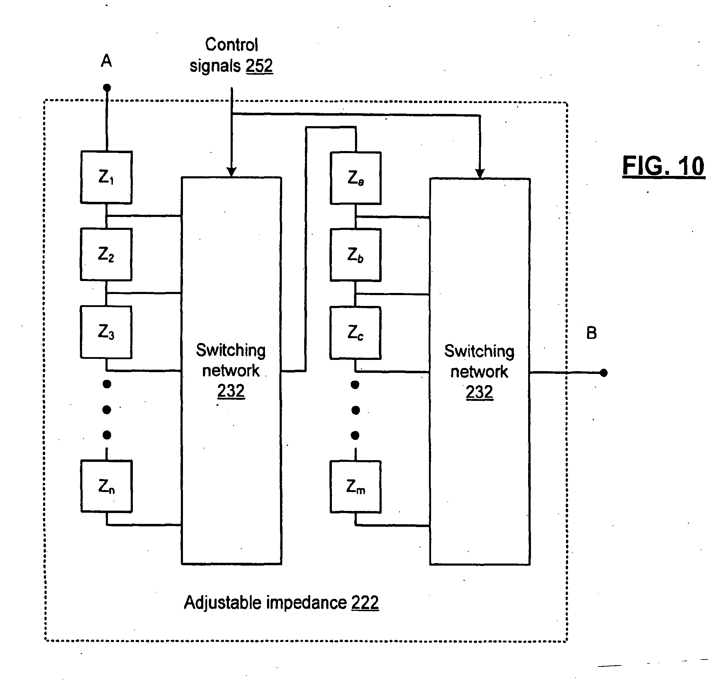

FIG. 10 is a schematic block diagram of an embodiment of an adjustable impedance in accordance with the present invention. An adjustable impedance 222 is shown that includes a plurality of group A fixed network elements Z₁, Z₂, Z₃, ... Zₙ and group B fixed network elements Zₐ, Z_{b}, Z_{c}, ... Zₘ such as resistors, or reactive network elements such as capacitors, and/or inductors. A switching network 232 selectively couples the plurality of fixed network elements in response to one or more control signals 252, such as antenna control signals 212 to form a series combination of two adjustable impedances. In operation, the switching network 232 selects at least one of the plurality of fixed reactive network elements and that deselects the remaining ones of the plurality of fixed reactive network elements in response to the control signals 252. In particular, switching network 232 operates to couple one of the plurality of taps from the group A impedances to the group B impedances and one of the plurality of taps of the group B impedances to the terminal B. In this fashion, the impedance between terminals A and B is adjustable and can be to form a series circuit such as series tank circuit having a total impedance equal to the series combination between a group A impedance Z_{A} = Z₁, Z₁ + Z₂, or Z₁ + Z₂ + Z₃, etc, and a Group B impedance Z_{B} = Zₐ, Zₐ + Z_{b}, or Zₐ + Z_{b} + Z_{c}, etc., based on the taps selected.

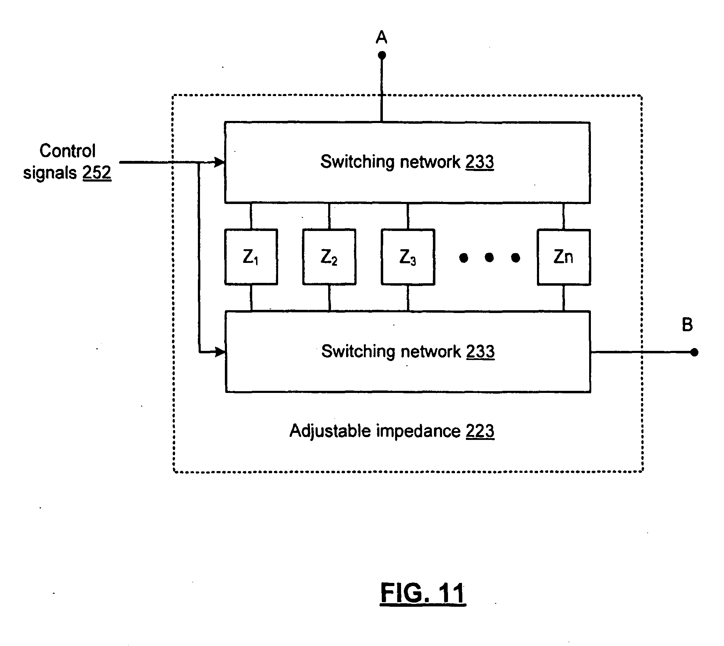

FIG. 11 is a schematic block diagram of an embodiment of an adjustable impedance in accordance with the present invention. An adjustable impedance 223 is shown that includes a plurality of fixed network elements Z₁, Z₂, Z₃, ... Zₙ such as resistors, or reactive network elements such as capacitors, and/or inductors. A switching network 233 selectively couples the plurality of fixed network elements in response to one or more control signals 252, such as antenna control signals 212. In operation, the switching network 233 selects at least one of the plurality of fixed reactive network elements and that deselects the remaining ones of the plurality of fixed reactive network elements in response to the control signals 252. In particular, switching network 233 operates to couple one of the plurality of taps of the top legs of the selected elements to terminal A and the corresponding bottom legs of the selected elements to terminal B. In this fashion, the impedance between terminals A and B is adjustable to include a total impedance that is the parallel combination of the selected fixed impedances. Choosing the fixed network elements Z₁, Z₂, Z₃, ... Zₙ to be a plurality of inductances, allows the adjustable impedance 220 to implement an adjustable inductor, from the range from the parallel combination of (Z₁, Z₂, Z₃, ... Zₙ) to MAX(Z₁, Z₂, Z₃.... Zₙ). Also, the fixed network elements Z₁, Z₂, Z₃, ... Zₙ can be chosen as a plurality of capacitances.

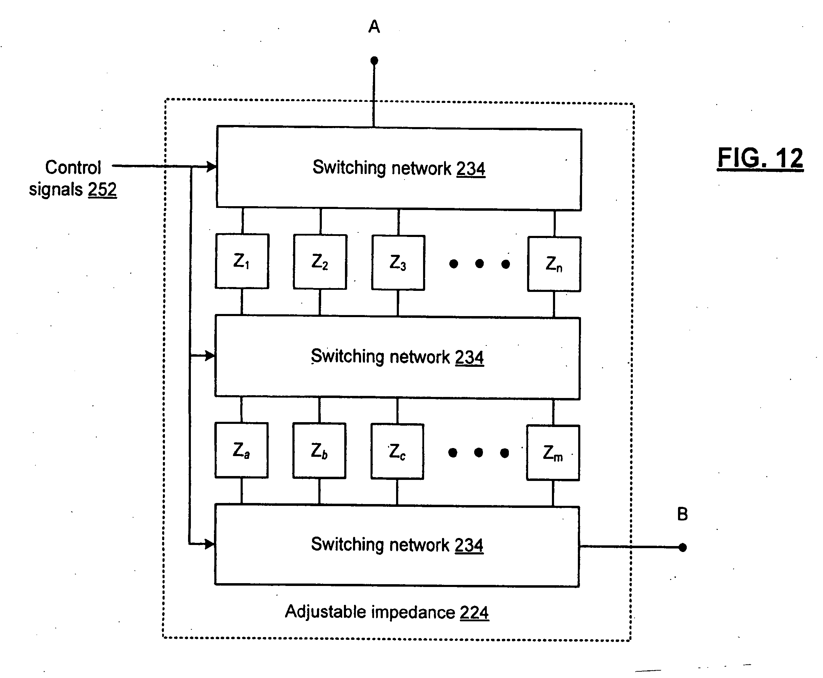

FIG. 12 is a schematic block diagram of an embodiment of an adjustable impedance in accordance with the present invention. An adjustable impedance 224 is shown that includes a plurality of group A fixed network elements Z₁, Z₂, Z₃, ... Zₙ and group B fixed network elements Zₐ, Z_{b}, Z_{c}, ... Zₘ such as resistors, or reactive network elements such as capacitors, and/or inductors. A switching network 234 selectively couples the plurality of fixed network elements in response to one or more control signals 252, such as antenna control signals 212 to form a series combination of two adjustable impedances. In operation, the switching network 234 selects at least one of the plurality of fixed reactive network elements and that deselects the remaining ones of the plurality of fixed reactive network elements in response to the control signals 252. In particular, switching network 232 operates to couple a selected parallel combination of impedances from the group A in series with a selected parallel combination of group B impedances. In this fashion, the impedance between terminals A and B is adjustable and can be to form a series circuit such as series tank circuit having a total impedance equal to the series combination between a group A impedance Z_{A} and a Group B impedance Z_{B}, based on the taps selected.

FIG. 13 is a schematic block diagram of an embodiment of a programmable impedance matching network in accordance with the present invention. A programmable impedance matching network 240 is shown that includes a plurality of adjustable impedances 290, responsive to matching control signals 214. In particular, each of the adjustable impedances 290 can be implemented in accordance with any of the adjustable impedances discussed in association with the impedances used to implement programmable antenna element 200 discussed in FIGs. 8-12, with the control signals 252 being supplied by matching network control signal 214, instead of antenna control signals 212. In the configuration shown, a t-network configuration is implemented with three adjustable impedances, however, one or more these adjustable impedances can alternatively be replaced by an open-circuit or short circuit to produce other configurations including an L-section matching network. Further, one or more of the adjustable impedances 290 can be replaced by fixed impedances, such as resistors, or fixed reactive network elements.

FIG. 14 is a schematic block diagram of an embodiment of a programmable impedance matching network in accordance with the present invention. A programmable impedance matching network 242 is shown that includes a plurality of adjustable impedances 290, responsive to matching control signals 214. In particular, each of the adjustable impedances 290 can be implemented in accordance with any of the adjustable impedances discussed in association with the impedances used to implement programmable antenna element 200 discussed in FIGs. 8-12, with the control signals 252 being supplied by matching network control signal 214, instead of antenna control signals 212. In the configuration shown, a pi-network configuration is implemented with three adjustable impedances, however, one or more these adjustable impedances can alternatively be replaced by an open-circuit or short circuit to produce other configurations. Further, one or more of the adjustable impedances 290 can be replaced by fixed impedances, such as resistors, or fixed reactive network elements.

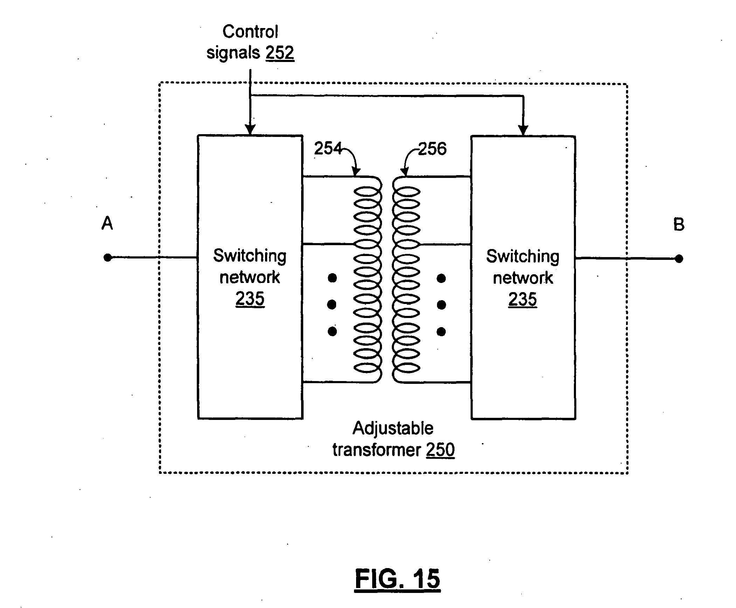

FIG. 15 is a schematic block diagram of an embodiment of an adjustable transformer in accordance with the present invention. An adjustable transformer is shown that can be used in either the implementation of programmable antenna element 200, with control signals 252 being supplied by antenna control signals 212. Alternatively, adjustable transformer 250 can be used to implement all or part of the programmable impedance matching network 204, with control signals 252 being supplied by matching network control signals 214. In particular, multi-tap inductors 254 and 256 are magnetically coupled. Switching network 235 controls the tap selection for terminals A and B (and optionally to ground) to produce a transformer, such as a balun transformer or other voltage/current/impedance transforming device with controlled impedance matching characteristics and optionally with controlled bridging.

FIG. 16 is a schematic block diagram of an RF transceiver in accordance with the present invention that can be used in the implementation of RF transceiver 75 and/or 77. An RF transceiver 125' is presented that includes many common elements from RF transceiver 125 that are referred to by common reference numerals. In particular, an RF transmission and reception systems are disclosed that operate with frequency hopping. A frequency hop module generates frequency selection signal 169 that indicates a sequence of selected carrier frequencies. An RF transmitter 129 generates an outbound RF signal 170 at the sequence of selected carrier frequencies. Programmable antenna 173, such as programmable antenna 225 or 225' tunes to each frequency of the sequence of selected carrier frequencies, based on the frequency selection signal 169, to transmit the RF signal. Programmable antenna 171, such as programmable antenna 225 or 225', tunes to each frequency of the sequence of selected carrier frequencies, based on the frequency selection signal 169 and that receives an inbound RF signal 152 having the sequence of selected carrier frequencies. An RF receiver 127 demodulates the RF signal 127 to produce inbound data 160.

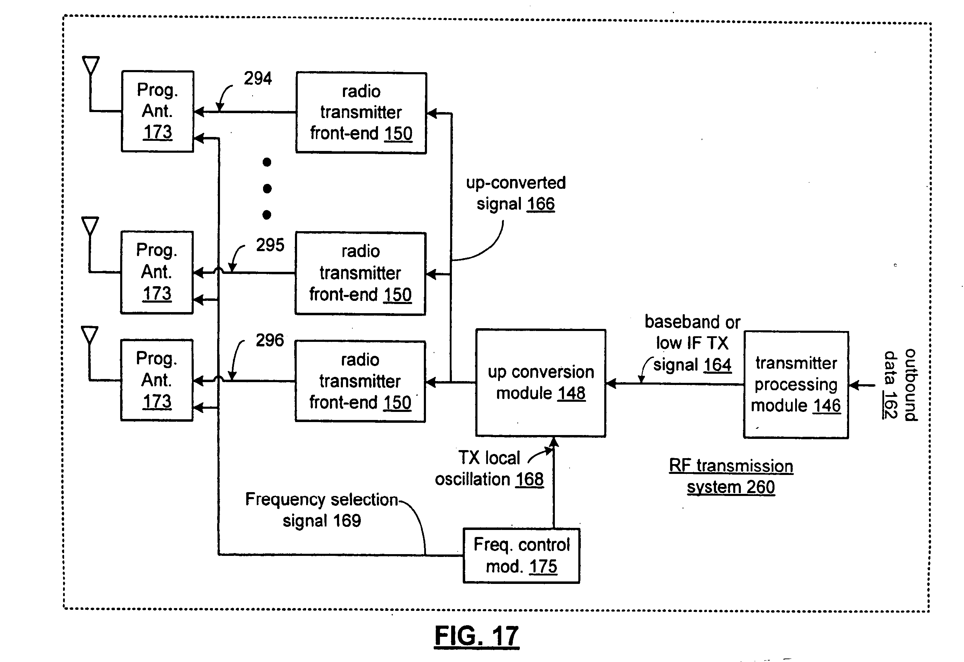

FIG. 17 is a schematic block diagram of an RF transmission system in accordance with the present invention. An RF transmission system 260 is disclosed that includes many common elements from RF transmitter 129 that are referred to by common reference numerals. In particular, RF transmission system 260 includes either a plurality of RF transmitters or a plurality of RF transmitter front ends 150 that generate a plurality of RF signals 294-296 at a selected carrier frequency in response to a frequency selection signal 169. A plurality of programmable antennas 173 such as antennas 225 or 225', are each tuned to the selected carrier frequency, in response to the frequency selection signal, to transmit a corresponding one of the plurality of RF signals 294-296.

In an embodiment of the present invention, the plurality of RF transmitter front ends 150 are implemented as part of a multi-input multi-output (MIMO) transceiving system that broadcasts multiple signals that are recombined in the receiver. In one mode of operation, antennas 173 can be spaced with physical diversity. In an embodiment of the present invention; the plurality of RF transmitter front-ends are implemented as part of a polarization diversity transceiving system that broadcasts multiple signals at different polarizations by antennas 173 configured at a plurality of different polarizations.

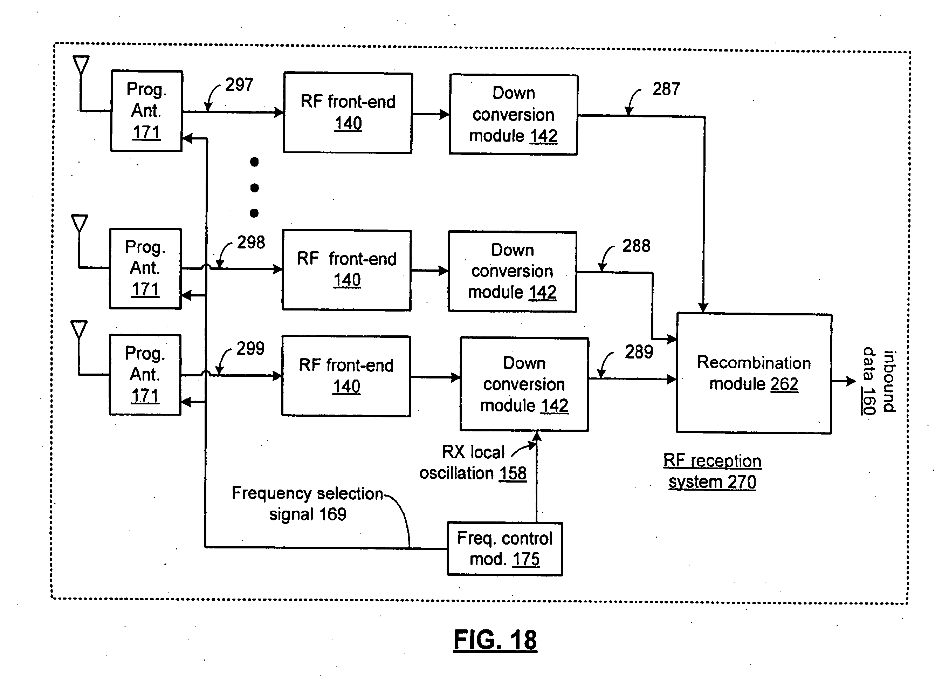

FIG. 18 is a schematic block diagram of an RF reception system in accordance with the present invention. An RF reception system 260 is disclosed that includes many common elements from RF receiver 127 that are referred to by common reference numerals. In particular, a plurality of programmable antennas 171 are each tuned to a selected carrier frequency in response to a frequency selection signal 169. The plurality of programmable antennas receive RF signals 297-299 having the selected carrier frequency. A plurality of RF receivers include RF front-ends 140 and down conversion modules 142, to demodulate the RF signal 297-299 into demodulated signal 287-289. A recombination module 262 produces a recombined data signal, such as inbound data 160 from the demodulated signals 287-289.

In an embodiment of the present invention, the plurality of RF front ends 140 are implemented as part of a multi-input multi-output (MIMO) transceiving system that broadcasts multiple signals that are recombined in the receiver. In one mode of operation, antennas 171 can be spaced with physical diversity. In an embodiment of the present invention, the plurality of RF front-ends 140 are implemented as part of a polarization diversity transceiving system that broadcasts multiple signals at different polarizations that are received by antennas 171, which are configured at a plurality of different polarizations.

Recombination module 262 can include a processing module that performs various processing steps to implement the functions and features described herein. Such a processing module can be implemented using a shared processing device, individual processing devices, or a plurality of processing devices and may further include memory. Such a -processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory may be a single memory device or a plurality of memory devices. Such a memory device may be a read-only memory, random access memory, volatile memory, non-volatile memory, static memory, dynamic memory, flash memory, and/or any device that stores digital information. Note that when the processing module implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

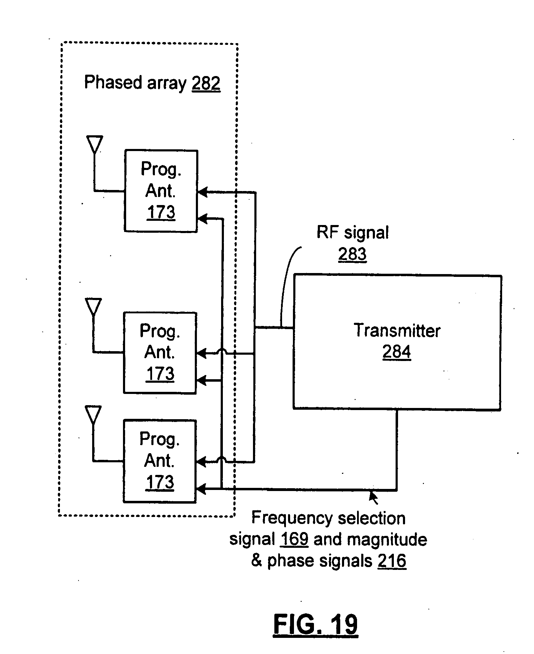

FIG. 19 is a schematic block diagram of a phased array antenna system 282 system in accordance with the present invention. In particular, phased array 282 includes a plurality of programmable antennas 173, such as programmable antennas 225 or 225', that are driven by an RF signal 283 from transmitter 284, such as RF transmitter 129. Transmitter 284 further includes frequency control module 175. Each of the plurality of programmable antennas 173 is tuned to a selected carrier frequency in response to a frequency selection signal 169. In addition, each of the plurality of programmable antennas has an antenna current that is adjusted in response to magnitude and phase adjust signals 216.

In an embodiment of the present invention, the plurality of programmable antennas combine to produce a controlled beam shape, such as with a main lobe in a selected direction, or a null in a selected direction. As the term null is used herein the radiation from the antenna in the selected direction is attenuated significantly, by an order or magnitude or more, in order to attenuate interference with another station set or to produce greater radiated output in the direction of the main lobe. The magnitudes and phases adjustments for each of the antennas can be calculated in many ways to achieve the desired beam shape, such as the manner presented in Stuckman & Hill, Method of Null Steering in Phased Array Antenna Systems, Electronics Letters, Vol. 26, No. 15, July 19, 1990, pp. 1216-1218.

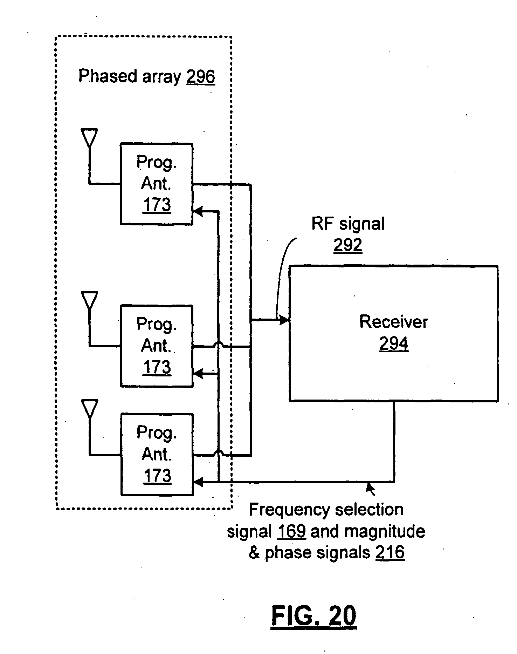

FIG. 20 is a schematic block diagram of a phased array antenna system 296 system in accordance with the present invention. In particular, phased array 296 includes a plurality of programmable antennas 173, such as programmable antennas 225 or 225', that combine to generate a plurality of RF signal 292 to receiver 294, such as RF receiver 127. Receiver 294 further includes frequency control module 175. Each of the plurality of programmable antennas 173 is tuned to a selected carrier frequency in response to a frequency selection signal 169. In addition, each of the plurality of programmable antennas has an antenna current that is adjusted in response to magnitude and phase adjust signals 216.

In an embodiment of the present invention, the plurality of programmable antennas combine to produce a controlled beam shape, such as with a main lobe in a selected direction, or a null in a selected direction. As discussed in conjunction with FIG. 18, the magnitudes and phases adjustments for each of the antennas can be calculated in many ways to achieve the desired beam shape.

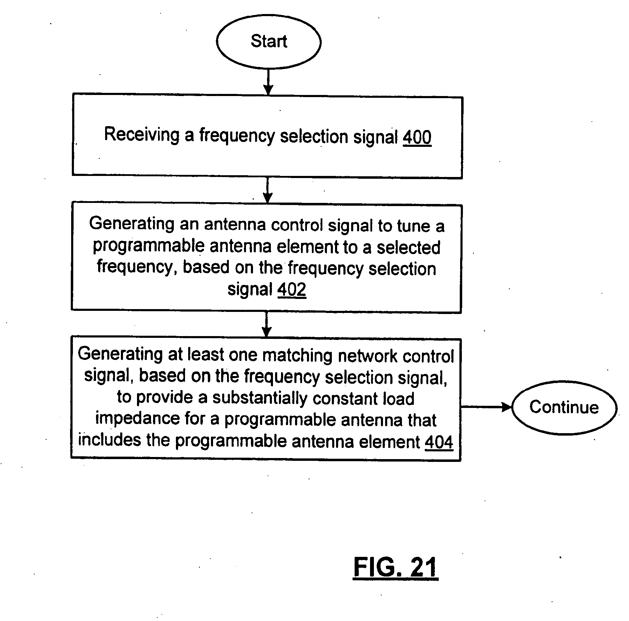

FIG. 21 is a flowchart representation of a method in accordance with an embodiment of the present invention. In particular a method is presented for use with one or more features or functions presented in conjunction with FIGs. 1-20. In step 400, a frequency selection signal is received. In step 402, an antenna control signal is generated to tune a programmable antenna element to a selected frequency, based on the frequency selection signal. In step 404, at least one matching network control signal is generated, based on the frequency selection signal, to provide a substantially constant load impedance for a programmable antenna that includes the programmable antenna element.

In an embodiment of the present invention, the at least one matching network control signal is further generated in response to a selected magnitude of an antenna current of the programmable antenna and a selected phase of the antenna current. The at least one matching network control signal can be generated to tune an adjustable balun transformer, to tune at least one adjustable reactive network element, to control a switching network for selectively coupling a plurality of fixed reactive network elements, to select at least one of the plurality of fixed reactive network elements and deselect the remaining ones of the plurality of fixed reactive network elements and/or to tune a plurality of adjustable reactive network elements.

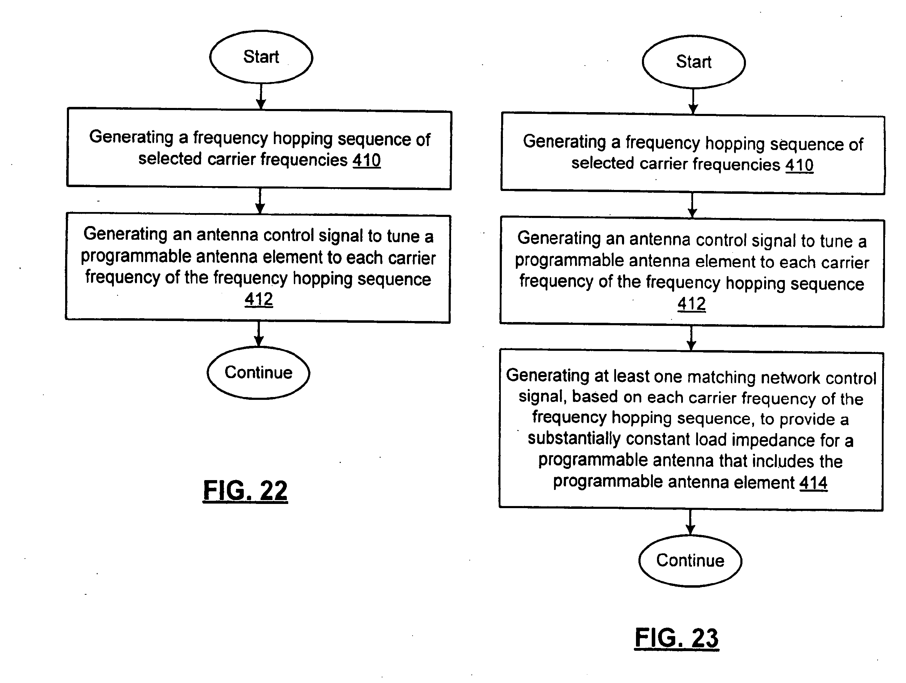

FIG. 22 is a flowchart representation of a method in accordance with an embodiment of the present invention. In particular, a method is presented for use in conjunction with one or more features and function discussed in conjunction with FIGs 1-21. In step 410, a frequency hopping sequence of selected carrier frequencies is generated. In step 412, an antenna control signal is generated to tune a programmable antenna element to each carrier frequency of the frequency hopping sequence.

FIG. 23 is a flowchart representation of a method in accordance with an embodiment of the present invention. In particular a method is presented for use in conjunction with one or more features discussed in conjunction with FIGs. 1-21, and that includes common elements from FIG. 22 that are referred to by common reference numerals. In addition, this method includes step 414 for generating at least one matching network control signal, based on each carrier frequency, to control a programmable impedance matching network to provide a substantially constant load impedance for a programmable antenna that includes the programmable antenna element.

In an embodiment of the present invention, at least one matching network control signal is further generated in response to a selected magnitude of an antenna current of the programmable antenna and a selected phase of the antenna current. the at least one matching network control signal is further generated in response to a selected magnitude of an antenna current of the programmable antenna and a selected phase of the antenna current. The at least one matching network control signal can be generated to tune an adjustable balun transformer, to tune at least one adjustable reactive network element, to control a switching network for selectively coupling a plurality of fixed reactive network elements, to select at least one of the plurality of fixed reactive network elements and deselect the remaining ones of the plurality of fixed reactive network elements and/or to tune a plurality of adjustable reactive network elements.

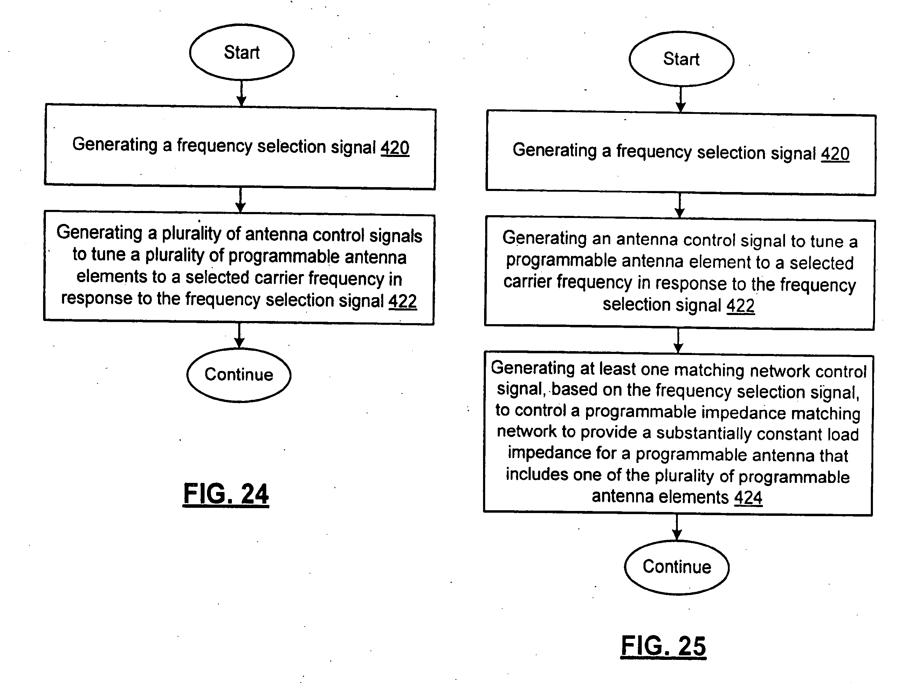

FIG. 24 is a flowchart representation of a method in accordance with an embodiment of the present invention. In particular, a method is presented for use with one or more features or function discussed in conjunction with FIGs. 1-23. In step 420, a frequency selection signal is generated. In step 422, a plurality of antenna control signals are generated to tune a plurality of programmable antenna elements to a selected carrier frequency in response to the frequency selection signal.

FIG. 25 is a flowchart representation of a method in accordance with an embodiment of the present invention. In particular, a method is presented for use with one or more features or function discussed in conjunction with FIGs. 1-23, and that includes elements from FIG. 24 that are referred to by common reference numerals. In addition, the method includes step 424 for generating at least one matching network control signal, based on the frequency selection signal, to control a programmable impedance matching network to provide a substantially constant load impedance for a programmable antenna that includes one of the plurality of the programmable antenna elements.

In an embodiment of the present invention, the at least one matching network control signal is further generated in response to a selected magnitude of an antenna current of the programmable antenna and a selected phase of the antenna current.

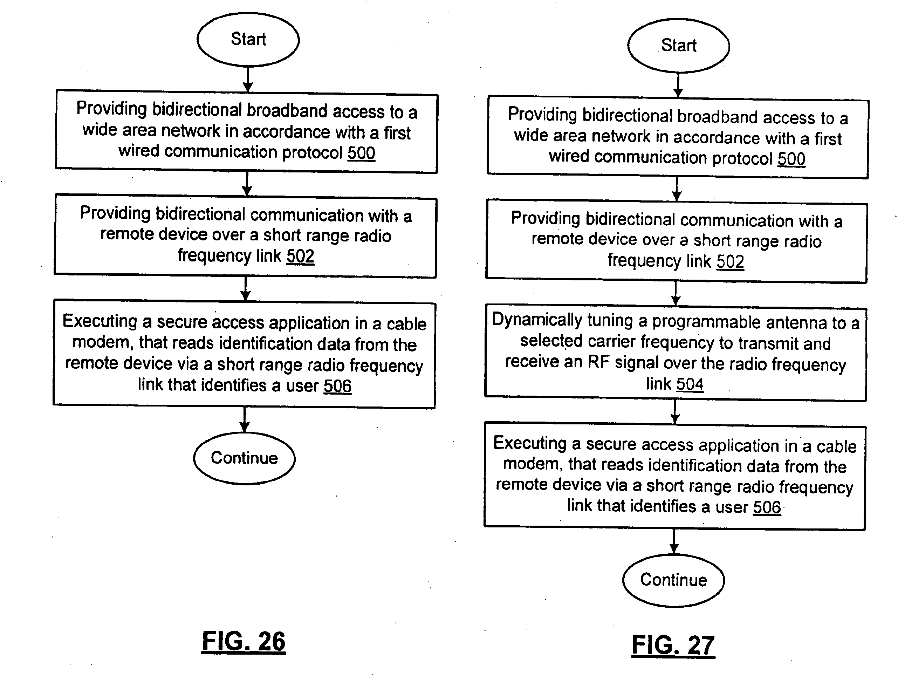

FIG. 26 is a flowchart representation of a method in accordance with an embodiment of the present invention. In particular a method is presented for use with one or more features and functions described in conjunction with FIGs 1-25. In step 500 bidirectional broadband access is provided to a wide area network in accordance with a first wired communication protocol. In step 502, bidirectional communication is provided with a remote device over a short range radio frequency link. In step 506, a secure access application is executed in a cable modem, the secure access application reading identification data that identifies a user from the remote device via the short range radio frequency link.

In an embodiment of the present invention, the secure access application identifies the user for one of, a purchase made by the user over the wide area network, a request for video on demand services, access by the user to the wide area network, access by the user to a particular site of the wide area network, and access to user settings. The remote device can be a RF tag and bidirectional communication with the remote device can be provided with a RF reader that is integrated in the cable modem. The short range radio frequency link can comply with a Bluetooth protocol and the remote device can be a Bluetooth enabled device. The short range radio frequency link can comply with a local area network protocol, such as 802.11 UWB or other network protocol and the remote device can be a multi-band telephone that can selectively communicate over the radio frequency link and an alternative wireless telephony network.

FIG. 27 is a flowchart representation of a method in accordance with an embodiment of the present invention. In particular, a method is presented that includes common elements described in conjunction with FIG. 26 that are referred to by common reference numerals. In addition, the method includes step 504 for dynamically tuning a programmable antenna to a selected carrier frequency to transmit and receive an RF signal over the radio frequency link, wherein the bidirectional communication is provided with the remote device over the short range radio frequency link at the selected carrier frequency.

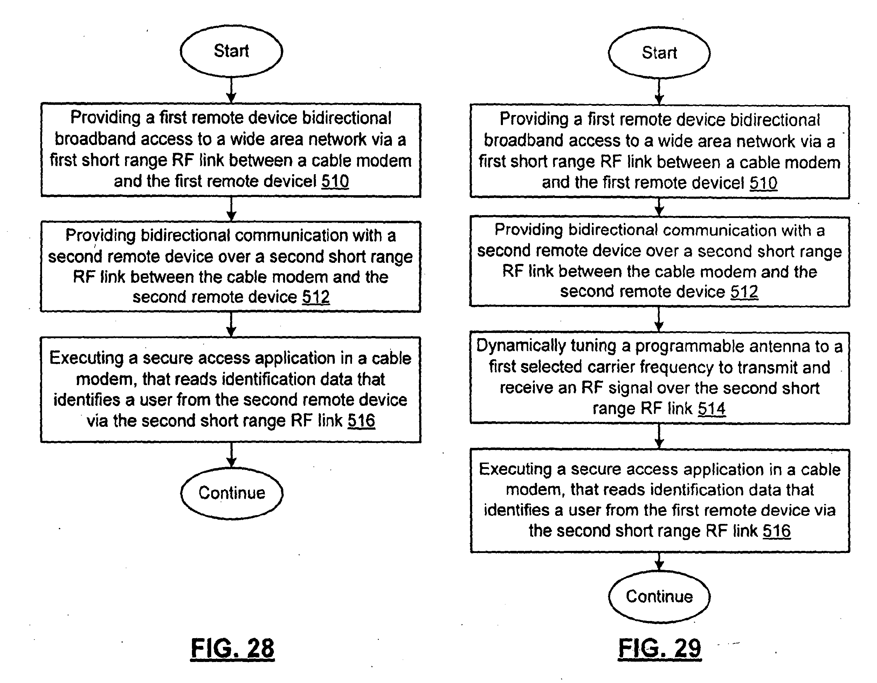

FIG. 28 is a flowchart representation of a method in accordance with an embodiment of the present invention. In particular a method is presented for use with one or more features and functions described in conjunction with FIGs 1-25. In step 510, a first remote device is provided bidirectional broadband access to a wide area network via a first short range radio frequency link between a cable modem and the first remote device. In step 512, bidirectional communication is provided with a second remote device over a second short range radio frequency link between a cable modem and the second remote device. In step 516, a secure access application is executed in the cable modem, the secure access application reading identification data link that identifies a user from the second remote device via the short range radio frequency.
In an embodiment of the present invention, the secure access application identifies the user for one of, a purchase made by the user over the wide area network, a request for video on demand services, access by the user to the wide area network, access by the user to a particular site of the wide area network, and access to user settings. The second remote device can be a RF tag and bidirectional communication with the remote device can be provided with a RF reader that is integrated in the cable modem. In the alternative, the second short range radio frequency link can comply with a Bluetooth protocol and the second remote device can be a Bluetooth enabled device. Further, the second short range radio frequency link can comply with a local area network protocol and the second remote device can be a multi-band telephone that can selectively communicate over the second short range radio frequency link and an alternative wireless telephony network.

FIG. 29 is a flowchart representation of a method in accordance with an embodiment of the present invention. In particular, a method is presented that includes common elements described in conjunction with FIG. 28 that are referred to by common reference numerals. In addition, the method includes step 514 for dynamically tuning a programmable antenna to a first selected carrier frequency to transmit and receive an RF signal over the first short range radio frequency link, wherein the bidirectional communication is provided with the first remote device over the first short range radio frequency link at the selected carrier frequency.

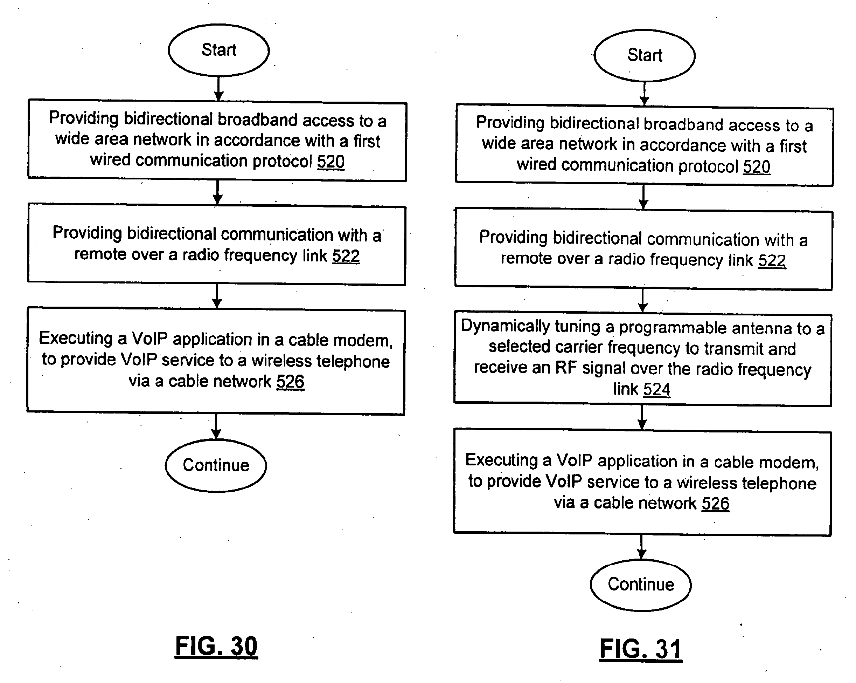

FIG. 30 is a flowchart representation of a method in accordance with an embodiment of the present invention. In particular a method is presented for use with one or more features and functions described in conjunction with FIGs 1-25. In step 520, bidirectional broadband access is provided to a wide area network in accordance with a first wired communication protocol. In step 522, bidirectional communication is provided with a wireless telephone over a radio frequency link. In step 526, a VoIP application is executed within a cable modem to provide VoIP service to the wireless telephone via the cable network.

In an embodiment of the present invention, the wireless telephone can be a VoIP telephone set that communicates exclusively over the radio frequency link. Alternatively, the radio frequency link can comply with a local area network protocol and the wireless telephone can be a multi-band telephone that can selectively communicate over the radio frequency link and an alternative wireless telephony network. In addition, the multi-band telephone can selectively access data services of the wide area network via the cable modem and the radio frequency link.

FIG. 31 is a flowchart representation of a method in accordance with an embodiment of the present invention. In particular, a method is presented that includes common elements described in conjunction with FIG. 30 that are referred to by common reference numerals. In addition, the method includes step 524 for dynamically tuning a programmable antenna to a selected carrier frequency to transmit and receive an RF signal over the radio frequency link.

While various aspects of the invention have been described in terms of their operation within a cable modem, the various functions and features of the present invention may likewise be implemented in a set-top box, digital video recorder, digital subscriber line modem, router, wireless LAN repeater, television, video monitor, telephone, home gateway, computer or other home multimedia device.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

While the transistors discussed above may be field effect transistors (FETs), as one of ordinary skill in the art will appreciate, the transistors may be implemented using any type of transistor structure including, but not limited to, bipolar, metal oxide semiconductor field effect transistors (MOSFET), N-well transistors, P-well transistors, enhancement mode, depletion mode, and zero voltage threshold (VT) transistors.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed.

## Claims

1. A cable modem (50) comprising:
a cable transceiver (62) coupled to a cable network (60), said cable transceiver (62) adapted to enable a bidirectional broadband access to a wide area network in accordance with a first wired communication protocol;
a radio frequency RF transceiver (75) adapted to enable bidirectional communication with a remote device (54, 56, 58) over a short range radio frequency link;
a memory module (68), wherein a secure access application (72) is stored on the memory module (68); and
a processing module (66), coupled to the cable transceiver (62), the RF transceiver (75) and the memory module (68), wherein the secure access application (72) is executable by the processing module (66), the secure access application (72) is operable to read identification data from the remote device (54, 56, 58) via the short range radio frequency link, wherein the identification data is adapted to enable the identification of a user,
**characterized in that** said cable modem further comprises
a programmable antenna (225'), coupled to the RF transceiver (75), that is dynamically tunable to a selected carrier frequency to transmit and receive an RF signal over the short range radio frequency link,
wherein said programmable antenna (225') comprises
- a control module (210) adapted to generate antenna control signals in response to a frequency selection signal (169), and
- a fixed antenna element (202), and
- a programmable antenna element (200) that is tunable to a particular resonant frequency and is operatively coupled to said fixed antenna element (202) and communicatively coupled to said control module (210) for receiving said antenna control signals (212), and
- a programmable impedance matching network (204) operatively coupled between said programmable antenna element (200) and said radio frequency (RF) transceiver (75) and adapted for maximizing power transfer between the programmable antenna element (200) and the transceiver (75), and communicatively coupled to the control module (210) for receiving matching network control signals (214), and
- wherein said programmable antenna element comprises an adjustable impedance (221, 222, 223) comprising one of
- a first group (Z1..Zn) and a second group (Za..Zm) of fixed network elements, each group consisting of resistors, capacitors and inductors and a switching network (231) adapted for selecting at least one fixed network element from each group and deselecting each other fixed network element of each group and forming a parallel circuit of the selected fixed network elements based on said antenna control signals (252), or
- a first group (Z1..Zn) and a second group (Za..Zm) of fixed network elements, each group consisting of resistors, capacitors and inductors and a switching network (232) adapted for selecting at least one fixed network element from each group and deselecting each other fixed network element of each group and forming a series circuit of the selected fixed network elements based on the antenna control signals (252), or
- a first group (Z1..Zn) and a second group (Za..Zm) of fixed network elements, each group consisting of resistors, capacitors and inductors and a switching network (234) adapted for selecting a parallel combination of fixed network elements from the first group and a parallel combination of fixed network elements from the second group of fixed network elements and to couple the elected parallel combinations of the first and second group respectively of fixed network elements in series based on the antenna control signals.

2. The cable modem (50) of claim 1 wherein the impedance matching network (204) consists of one of
- three adjustable impedances in an t-network configuration, each adjustable impedance responsive to matching control signals (214), or
- three adjustable impedances in a pi-network configuration, each adjustable impedance responsive to matching control signals (214), or
- an adjustable transformer (250) responsive to matching control signals (214).

3. The cable modem (50) of claim 2, wherein at least one adjustable impedance is replaced by an open-circuit or a short-circuit.

4. The cable modem (50) of any preceding claim wherein the short range radio frequency link complies with a Bluetooth protocol and is enabled to communicate with a Bluetooth enabled remote device.

5. The cable modem (50) of claim 1 wherein the short range radio frequency link complies with a local area network protocol and the remote device is a multi-band telephone that is enabled to selectively communicate over the short range radio frequency link and an alternative wireless telephony network.

6. A method comprising:
providing in a cable modem bidirectional broadband access to a wide area network in accordance with a first wired communication protocol;
providing in the cable modem bidirectional communication with a remote device over a short range radio frequency link; and
executing a secure access application (72) in the cable modem (50), the secure access application (50) reading identification data that identifies a user from the remote devise (54, 56 58) via the short range radio frequency link, **characterized in that** said method further comprises the step of
dynamically tuning a programmable antenna (225') of the cable modem to a selected carrier frequency to transmit and receive an RF signal over the short range radio frequency link,
wherein the programmable antenna (225') comprises
- a control module (210) adapted to generate antenna control signals in response to a frequency selection signal (169), and
- a fixed antenna element (202), and
- a programmable antenna element (200) that is tunable to a particular resonant frequency and operatively coupled to said fixed antenna element (202) and communicatively coupled to said control module (210) for receiving said antenna control signals (212), and
- a programmable impedance matching network (204) operatively coupled between said programmable antenna element (200) and said radio frequency (RF) transceiver (75) and adapted for maximizing power transfer between the programmable antenna element (200) and the transeiver (75), and communicatively coupled to the control module (210) for receiving matching network control signals (214)
- wherein said programmable antenna element comprises an adjustable impedance (221, 222, 223) comprising one of
- a first group (Z1..Zn) and a second group (Za..Zm) of fixed network elements, each group consisting of resistors, capacitors and inductors and a switching network (231) adapted for selecting at least one fixed network element from each group and deselecting each other fixed network element of each group and forming a parallel circuit of the selected fixed network elements based on said antenna control signals (252), or
- a first group (Z1..Zn) and a second group (Za..Zm) of fixed network elements, each group consisting of resistors, capacitors and inductors and a switching network (232) adapted for selecting at least one fixed network element from each group and deselecting each other fixed network element of each group and forming a series circuit of the selected fixed network elements based on the antenna control signals (252), or
- a first group (Z1..Zn) and a second group (Za..Zm) of fixed network elements, each group consisting of resistors, capacitors and inductors and a switching network (234) adapted for selecting a parallel combination of fixed network elements from the first group and a parallel combination of fixed network elements from the second group of fixed network elements and to couple the selected parallel combinations of the first and second group respectively of fixed network elements in series based on the antenna control signals.

7. The method of claim 6, wherein the secure access application (72) identifies the user for one of:
a purchase made by the user over the wide area network,
a request for video on demand services,
access by the user to the wide area network,
access by the user to a particular site of the wide area network, and
access to user setting.

## Patentansprüche

1. Kabelmodem (50) mit:
einem Kabeltransceiver (62), der an ein Kabelnetz (60) gekoppelt ist, wobei der Kabeltransceiver (62) so ausgelegt ist, dass er einen bidirektionalen Breitbandzugriff auf ein Fernnetz gemäß einem ersten Draht-Kommunikationsprotokoll ermöglicht;
einem Hochfrequenz, HF, -Transceiver (75), der so ausgelegt ist, dass er eine bidirektionale Kommunikation mit einem fernen Gerät (54, 56, 58) über eine Kurzbereichs-Funkfrequenzverbindung ermöglicht;
einem Speichermodul (68), wobei eine sichere Zugriffsanwendung (72) in dem Speichermodul (68) gespeichert ist; und
einem Verarbeitungsmodul (66), das an den Kabeltransceiver (62), den HF-Transceiver (75) und das Speichermodul (68) gekoppelt ist, wobei die sichere Zugriffsanwendung (72) von dem Verarbeitungsmodul (66) ausführbar ist, wobei die sichere Zugriffsanwendung (72) so betreibbar ist, dass sie Identifizierungsdaten aus dem fernen Gerät (54, 56, 58) über die Kurzbereichs-Funkfrequenzverbindung liest, wobei die Identifizierungsdaten so ausgelegt sind, dass sie die Identifizierung eines Benutzers ermöglichen,
**dadurch gekennzeichnet, dass** das Kabelmodem des Weiteren aufweist:
eine programmierbare Antenne (225'), die an den HF-Transceiver (75) gekoppelt ist und die dynamisch auf eine ausgewählte Trägerfrequenz eingestellt werden kann, um ein HF-Signal über die Kurzbereichs-Hochfrequenzverbindung zu senden und zu empfangen,
wobei die programmierbare Antenne (225') aufweist:
- ein Steuermodul (210), das so ausgelegt ist, dass es Antennensteuersignale im Ansprechen auf ein Frequenzwahlsignal (169) erzeugt, und
- ein festes Antennenelement (202), und
- ein programmierbares Antennenelement (200), das auf eine bestimmte Resonanzfrequenz eingestellt werden kann und betriebsbereit an das feste Antennenelement (202) und kommunikativ an das Steuermodul (210) gekoppelt ist, um die Antennensteuersignale (212) zu empfangen, und
- ein programmierbares Impedanzanpassungsnetz (204), das betriebsbereit zwischen das programmierbare Antennenelement (200) und den Hochfrequenz (HF)-Transceiver (75) geschaltet und so ausgelegt ist, dass es Energieübertragung zwischen dem programmierbaren Antennenelement (200) und dem Transceiver (75) maximiert, und das kommunikativ an das Steuermodul (210) gekoppelt ist, um passende Netzwerksteuersignale (214) zu empfangen, und
- wobei das programmierbare Antennenelement eine einstellbare Impedanz (221, 222, 223) aufweist, die eines aufweist von
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (231), das so ausgelegt ist, dass es wenigstens ein festes Netzwerkelement aus jeder Gruppe auswählt und jedes andere feste Netzwerkelement jeder Gruppe abwählt und eine Parallelschaltung der ausgewählten festen Netzwerkelemente basierend auf den Antennensteuersignalen (252) ausbildet, oder
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (232), das so ausgelegt ist, dass es wenigstens ein festes Netzwerkelement aus jeder Gruppe auswählt und jedes andere feste Netzwerkelement jeder Gruppe abwählt und eine Reihenschaltung der ausgewählten festen Netzwerkelemente basierend auf den Antennensteuersignalen (252) ausbildet, oder
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (234), das so ausgelegt ist, dass es eine parallele Kombination fester Netzwerkelemente aus der ersten Gruppe und eine parallele Kombination fester Netzwerkelemente aus der zweiten Gruppe fester Netzwerkelemente auswählt und die ausgewählten parallelen Kombinationen der ersten bzw. der zweiten Gruppe fester Netzwerkelemente basierend auf den Antennensteuersignalen in Reihe schaltet.

2. Kabelmodem (50) nach Anspruch 1, wobei das
Impedanzanpassungsnetz (204) besteht aus einem von
- drei anpassbaren Impedanzen in einer t-Netz-Konfiguration, wobei jede anpassbare Impedanz auf passende Steuersignale (214) anspricht, oder
- drei anpassbaren Impedanzen in einer pi-Netz-Konfiguration, wobei jede anpassbare Impedanz auf passende Steuersignale (214) anspricht, oder
- einem einstellbaren Transformator (250), der auf passende Steuersignale (214) anspricht.

3. Kabelmodem (50) nach Anspruch 2, wobei wenigstens eine anpassbare Impedanz durch einen offenen Stromkreis oder einen Kurzschluss ersetzt wird.

4. Kabelmodem (50) nach einem der vorhergehenden Ansprüche, wobei sich die Kurzbereichs-Hochfrequenzverbindung nach einem Bluetooth Protokoll richtet und mit einem Bluetooth-aktivierten fernen Gerät kommunizieren kann.

5. Kabelmodem (50) nach Anspruch 1, wobei sich die Kurzbereichs-Hochfrequenzverbindung nach einem Protokoll des lokalen Netzes richtet und das ferne Gerät ein Mehrbandtelefon ist, das selektiv über die Kurzbereichs-Hochfrequenzverbindung und ein alternatives drahtloses Telefonnetz kommunizieren kann.

6. Verfahren, das umfasst:
Bereitstellen, in einem Kabelmodem, von bidirektionalem Breitbandzugriff auf ein Fernnetz gemäß einem ersten Draht-Kommunikationsprotokoll;
Bereitstellen, in dem Kabelmodem, von bidirektionaler Kommunikation mit einem fernen Gerät über eine Kurzbereichs-Funkfrequenzverbindung; und
Ausführen einer sicheren Zugriffsanwendung (72) in dem Kabelmodem (50), wobei die sichere Zugriffsanwendung (50) Identifizierungsdaten, die einen Benutzer identifizieren, über die Kurzbereichs-Hochfrequenzschaltung aus dem fernen Gerät (54, 56, 58) liest,
**dadurch gekennzeichnet, dass** das Verfahren des Weiteren den folgenden Schritt umfasst:
dynamisches Einstellen einer programmierbaren Antenne (225') des Kabelmodems auf eine ausgewählte Trägerfrequenz, um ein HF-Signal über die Kurzbereichs-Hochfrequenzverbindung zu senden und zu empfangen,
wobei die programmierbare Antenne (225') aufweist:
- ein Steuermodul (210), das so ausgelegt ist, dass es Antennensteuersignale im Ansprechen auf ein Frequenzwahlsignal (169) erzeugt, und
- ein festes Antennenelement (202), und
- ein programmierbares Antennenelement (200), das auf eine bestimmte Resonanzfrequenz eingestellt werden kann und betriebsbereit an das feste Antennenelement (202) und kommunikativ an das Steuermodul (210) gekoppelt ist, um die Antennensteuersignale (212) zu empfangen, und
- ein programmierbares Impedanzanpassungsnetz (204), das betriebsbereit zwischen das programmierbare Antennenelement (200) und den Hochfrequenz (HF)-Transceiver (75) geschaltet und so ausgelegt ist, dass es Energieübertragung zwischen dem programmierbaren Antennenelement (200) und dem Transceiver (75) maximiert, und das kommunikativ an das Steuermodul (210) gekoppelt ist, um passende Netzwerksteuersignale (214) zu empfangen, und
- wobei das programmierbare Antennenelement eine einstellbare Impedanz (221, 222, 223) aufweist, die eines aufweist von
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (231), das so ausgelegt ist, dass es wenigstens ein festes Netzwerkelement aus jeder Gruppe auswählt und jedes andere feste Netzwerkelement jeder Gruppe abwählt und eine Parallelschaltung der ausgewählten festen Netzwerkelemente basierend auf den Antennensteuersignalen (252) ausbildet, oder
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (232), das so ausgelegt ist, dass es wenigstens ein festes Netzwerkelement aus jeder Gruppe auswählt und jedes andere feste Netzwerkelement jeder Gruppe abwählt und eine Reihenschaltung der ausgewählten festen Netzwerkelemente basierend auf den Antennensteuersignalen (252) ausbildet, oder
- einer ersten Gruppe (Z1 ... Zn) und einer zweiten Gruppe (Za ... Zm) fester Netzwerkelemente, wobei jede Gruppe aus Widerständen, Kondensatoren und Induktoren besteht, und einem Schaltnetz (234), das so ausgelegt ist, dass es eine parallele Kombination fester Netzwerkelemente aus der ersten Gruppe und eine parallele Kombination fester Netzwerkelemente aus der zweiten Gruppe fester Netzwerkelemente auswählt und die ausgewählten parallelen Kombinationen der ersten bzw. der zweiten Gruppe fester Netzwerkelemente basierend auf den Antennensteuersignalen in Reihe schaltet.

7. Verfahren nach Anspruch 6, wobei die sichere Zugriffsanwendung (72) den Benutzer für eines der folgenden identifiziert:
einen Kauf, der von dem Benutzer über das Fernnetz getätigt wird,
eine Anforderung von Video-on-Demand-Diensten,
Zugriff auf das Fernnetz durch den Benutzer,
Zugriff auf eine bestimmte Seite des Fernnetzes durch den Benutzer, und
Zugriff auf Benutzereinstellungen.

## Revendications

1. Modem câblé (50) comprenant :
un émetteur-récepteur câblé (62) couplé à un réseau câblé (60), ledit émetteur-récepteur câblé (62) adapté à permettre un accès bidirectionnel en bande large à un réseau étendu conformément à un premier protocole de communication filaire ;
un émetteur-récepteur à fréquence radio RF (75) adapté à permettre une communication bidirectionnelle avec un dispositif distant (54, 56, 58) sur une liaison à fréquence radio courte portée ;
un module de mémoire (68), dans lequel une application d'accès sécurisé (72) est stockée sur le module de mémoire (68) ; et
un module de traitement (66), couplé à l'émetteur-récepteur câblé (62), à l'émetteur-récepteur RF (75) et au module de mémoire (68), dans lequel l'application d'accès sécurisé (72) est exécutable par le module de traitement (66), l'application d'accès sécurisé (72) est utilisable pour lire des données d'identification provenant du dispositif distant (54, 56, 58) par l'intermédiaire de la liaison à fréquence radio courte portée, dans lequel les données d'identification sont adaptées à permettre l'identification d'un utilisateur,
**caractérisé en ce que** ledit modem câblé comprend en outre une antenne programmable (225'), couplée à l'émetteur-récepteur RF (75), qui est dynamiquement syntonisable sur une fréquence porteuse sélectionnée pour émettre et recevoir un signal RF sur la liaison à fréquence radio courte portée,
dans lequel ladite antenne programmable (225') comprend
- un module de commande (210) adapté à générer des signaux de commande d'antenne en réponse à un signal de sélection de fréquence (169), et
- un élément d'antenne fixe (202), et
- un élément d'antenne programmable (200) qui est syntonisable sur une fréquence de résonance particulière et est opérationnellement couplé audit élément d'antenne fixe (202) et couplé en communication avec ledit module de commande (210) pour recevoir lesdits signaux de commande d'antenne (212), et
- un réseau programmable d'adaptation d'impédance (204) opérationnellement couplé entre ledit élément d'antenne programmable (200) et ledit émetteur-récepteur à fréquence radio (RF) (75) et adapté à maximiser un transfert de puissance entre l'élément d'antenne programmable (200) et l'émetteur-récepteur (75), et couplé en communication avec ledit module de commande (210) pour recevoir des signaux de commande de réseau d'adaptation (214), et
- dans lequel ledit élément d'antenne programmable comprend une impédance réglable (221, 222, 223) comprenant l'un
- d'un premier groupe (Z1...Zn) et d'un deuxième groupe (Za...Zm) d'éléments de réseau fixes, chaque groupe consistant en des résistances, des condensateurs et des inducteurs et un réseau de commutation (231) adapté à sélectionner au moins un élément de réseau fixe de chaque groupe et à désélectionner chaque autre élément de réseau fixe de chaque groupe et à former un circuit en parallèle des éléments de réseau fixes sélectionnés sur la base desdits signaux de commande d'antenne (252), ou
- d'un premier groupe (Z1...Zn) et d'un deuxième groupe (Za...Zm) d'éléments de réseau fixes, chaque groupe consistant en des résistances, des condensateurs et des inducteurs et un réseau de commutation (232) adapté à sélectionner au moins un élément de réseau fixe de chaque groupe et à désélectionner chaque autre élément de réseau fixe de chaque groupe et à former un circuit en série des éléments de réseau fixes sélectionnés sur la base des signaux de commande d'antenne (252), ou
- d'un premier groupe (Z1...Zn) et d'un deuxième groupe (Za...Zm) d'éléments de réseau fixes, chaque groupe consistant en des résistances, des condensateurs et des inducteurs et un réseau de commutation (234) adapté à sélectionner une combinaison en parallèle d'éléments de réseau fixes du premier groupe et une combinaison en parallèle d'éléments de réseau fixes du deuxième groupe d'éléments de réseau fixes et à coupler les combinaisons en parallèle sélectionnées du premier et du deuxième groupe respectivement d'éléments de réseau fixes en série sur la base des signaux de commande d'antenne.

2. Modem câblé (50) selon la revendication 1, dans lequel le réseau d'adaptation d'impédance (204) consiste en l'un
- de trois impédances réglables dans une configuration de réseau en T, chaque impédance réglable répondant à des signaux de commande d'adaptation (214), ou
- de trois impédances réglables dans une configuration de réseau en pi, chaque impédance réglable répondant à des signaux de commande d'adaptation (214), ou
- d'un transformateur réglable (250) répondant à des signaux de commande d'adaptation (214).

3. Modem câblé (50) selon la revendication 2, dans lequel au moins une impédance réglable est remplacée par un circuit ouvert ou un court-circuit.

4. Modem câblé (50) selon une quelconque revendication précédente, dans lequel la liaison à fréquence radio courte portée est conforme à un protocole Bluetooth et est apte à communiquer avec un dispositif distant Bluetooth.

5. Modem câblé (50) selon la revendication 1, dans lequel la liaison à fréquence radio courte portée est conforme à un protocole de réseau local et le dispositif distant est un téléphone multibande qui est apte à communiquer sélectivement sur la liaison à fréquence radio courte portée et un autre réseau de téléphonie sans fil.

6. Procédé comprenant :
la prévision dans un modem câblé d'un accès bidirectionnel en bande large à un réseau étendu conformément à un premier protocole de communication filaire ;
la prévision dans le modem câblé d'une communication bidirectionnelle avec un dispositif distant sur une liaison à fréquence radio courte portée ; et
l'exécution d'une application d'accès sécurisé (72) dans le modem câblé (50), l'application d'accès sécurisé (72) lisant des données d'identification qui identifient un utilisateur provenant du dispositif distant (54, 56, 58) par l'intermédiaire de la liaison à fréquence radio courte portée,
**caractérisé en ce que** ledit procédé comprend en outre l'étape de
syntonisation dynamique d'une antenne programmable (225') du modem câblé sur une fréquence porteuse sélectionnée pour émettre et recevoir un signal RF sur la liaison à fréquence radio courte portée,
dans lequel l'antenne programmable (225') comprend
- un module de commande (210) adapté à générer des signaux de commande d'antenne en réponse à un signal de sélection de fréquence (169), et
- un élément d'antenne fixe (202), et
- un élément d'antenne programmable (200) qui est syntonisable sur une fréquence de résonance particulière et est opérationnellement couplé audit élément d'antenne fixe (202) et couplé en communication avec ledit module de commande (210) pour recevoir lesdits signaux de commande d'antenne (212), et
- un réseau programmable d'adaptation d'impédance (204) opérationnellement couplé entre ledit élément d'antenne programmable (200) et ledit émetteur-récepteur à fréquence radio (RF) (75) et adapté à maximiser un transfert de puissance entre l'élément d'antenne programmable (200) et l'émetteur-récepteur (75), et couplé en communication avec ledit module de commande (210) pour recevoir des signaux de commande de réseau d'adaptation (214),
- dans lequel ledit élément d'antenne programmable comprend une impédance réglable (221, 222, 223) comprenant l'un
- d'un premier groupe (Z1...Zn) et d'un deuxième groupe (Za...Zm) d'éléments de réseau fixes, chaque groupe consistant en des résistances, des condensateurs et des inducteurs et un réseau de commutation (231) adapté à sélectionner au moins un élément de réseau fixe de chaque groupe et à désélectionner chaque autre élément de réseau fixe de chaque groupe et à former un circuit en parallèle des éléments de réseau fixes sélectionnés sur la base desdits signaux de commande d'antenne (252), ou
- d'un premier groupe (Z1 ...Zn) et d'un deuxième groupe (Za...Zm) d'éléments de réseau fixes, chaque groupe consistant en des résistances, des condensateurs et des inducteurs et un réseau de commutation (232) adapté à sélectionner au moins un élément de réseau fixe de chaque groupe et à désélectionner chaque autre élément de réseau fixe de chaque groupe et à former un circuit en série des éléments de réseau fixes sélectionnés sur la base des signaux de commande d'antenne (252), ou
- d'un premier groupe (Z1...Zn) et d'un deuxième groupe (Za...Zm) d'éléments de réseau fixes, chaque groupe consistant en des résistances, des condensateurs et des inducteurs et un réseau de commutation (234) adapté à sélectionner une combinaison en parallèle d'éléments de réseau fixes du premier groupe et une combinaison en parallèle d'éléments de réseau fixes du deuxième groupe d'éléments de réseau fixes et à coupler les combinaisons en parallèle sélectionnées du premier et du deuxième groupe respectivement d'éléments de réseau fixes en série sur la base des signaux de commande d'antenne.

7. Procédé selon la revendication 6, dans lequel l'application d'accès sécurisé (72) identifie l'utilisateur pour l'un
d'un achat effectué par l'utilisateur sur le réseau étendu,
d'une demande de services de vidéo à la demande,
d'un accès par l'utilisateur au réseau étendu,
d'un accès par l'utilisateur à un site particulier du réseau étendu, et d'un accès à des réglages d'utilisateur.
